(19)

**Europäisches Patentamt**
**European Patent Office**
**Office européen des brevets**

(11)    **EP 3 206 452 B1**

(12)    **EUROPEAN PATENT SPECIFICATION**

(45) Date of publication and mention
of the grant of the patent:
**16.10.2019   Bulletin 2019/42**

(51) Int Cl.:
**H04W 72/12** *(2009.01)*    **H04W 92/18** *(2009.01)*

(21) Application number: **16155017.3**

(22) Date of filing: **10.02.2016**

(54) **PRIORITY-OPTIMIZED SIDELINK DATA TRANSFER IN THE CASE OF AUTONOMOUS RESOURCE ALLOCATION IN LTE PROSE COMMUNICATION**

PRIORITÄTSOPTIMIERTE LTE PROSE SIDELINK-DATENÜBERTRAGUNG IM FALL VON AUTONOMER RESSOURCENZUWEISUNG

TRANSFERT DE DONNÉES À PRIORITÉ OPTIMISÉE SUR UNE LIAISON LTE PROSE LATERALE DANS LE CONTEXTE D'UNE ATTRIBUTION AUTONOME DE RESSOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2017   Bulletin 2017/33**

(73) Proprietor: **Panasonic Intellectual Property Corporation**
**of America**
**Torrance, CA 90503 (US)**

(72) Inventors:
• **LOEHR, Joachim**
**63225 Langen (DE)**
• **BASU MALLICK, Prateek**
**63225 Langen (DE)**
• **FENG, Sujuan**
**63225 Langen (DE)**

(74) Representative: **Grünecker Patent- und Rechtsanwälte**
**PartG mbB**
**Leopoldstraße 4**
**80802 München (DE)**

(56) References cited:
**US-A1- 2010 034 153     US-A1- 2015 305 080**

• **"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.2.0, 11 January 2016 (2016-01-11), pages 1-290, XP051047745, [retrieved on 2016-01-11]**
• **KYOCERA: "Consideration of bearer mapping for ProSe UE-to-Network Relays", 3GPP DRAFT; R2-154678_ED2D_BEARER MAPPING PROSE RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 4 October 2015 (2015-10-04), XP051005184, Retrieved from the Internet: URL:http://www.3gpp.org/ftp/Meetings_3GPP_ SYNC/RAN2/Docs/ [retrieved on 2015-10-04]**

**(Cont. next page)**

- INTEL CORPORATION: "Open aspects of priority handling for ProSe communication", 3GPP DRAFT; R2-154385_PRIORITY_HANDLING_INTEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmö, Sweden; 20151005 - 20151009 4 October 2015 (2015-10-04), XP051004961, Retrieved from the Internet: URL:http://www.3gpp.org/ftp/Meetings_3GPP_ SYNC/RAN2/Docs/ [retrieved on 2015-10-04]

- PANASONIC: "Buffer status reporting/priority handling for ProSe communication", 3GPP DRAFT; R2-154244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmö, Sweden; 20151005 - 20151009 4 October 2015 (2015-10-04), XP051004803, Retrieved from the Internet: URL:http://www.3gpp.org/ftp/Meetings_3GPP_ SYNC/RAN2/Docs/ [retrieved on 2015-10-04]

**Description**

**FIELD OF THE PRESENT DISCLOSURE**

The present disclosure relates to methods for performing sidelink data transmission over a sidelink. The present disclosure is also providing the transmitting user equipment for participating in the methods described herein.

**TECHNICAL BACKGROUND**

**Long Term Evolution (LTE)**

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio access technology that is highly competitive.

In order to be prepared for further increasing user demands and to be competitive against new radio access technologies, 3GPP introduced a new mobile communication system which is called Long Term Evolution (LTE). LTE is designed to meet the carrier needs for high speed data and media transport as well as high capacity voice support for the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is finalized as Release 8 (LTE Rel. 8). The LTE system represents efficient packet-based radio access and radio access networks that provide full IP-based functionalities with low latency and low cost. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM)-based radio access was adopted because of its inherent immunity to multipath interference (MPI) due to a low symbol rate, the use of a cyclic prefix (CP) and its affinity to different transmission bandwidth arrangements. Single-carrier frequency division multiple access (SC-FDMA)-based radio access was adopted in the uplink, since provisioning of wide area coverage was prioritized over improvement in the peak data rate considering the restricted transmit power of the user equipment (UE). Many key packet radio access techniques are employed including multiple-input multiple-output (MIMO) channel transmission techniques and a highly efficient control signaling structure is achieved in LTE Rel. 8/9.

**LTE architecture**

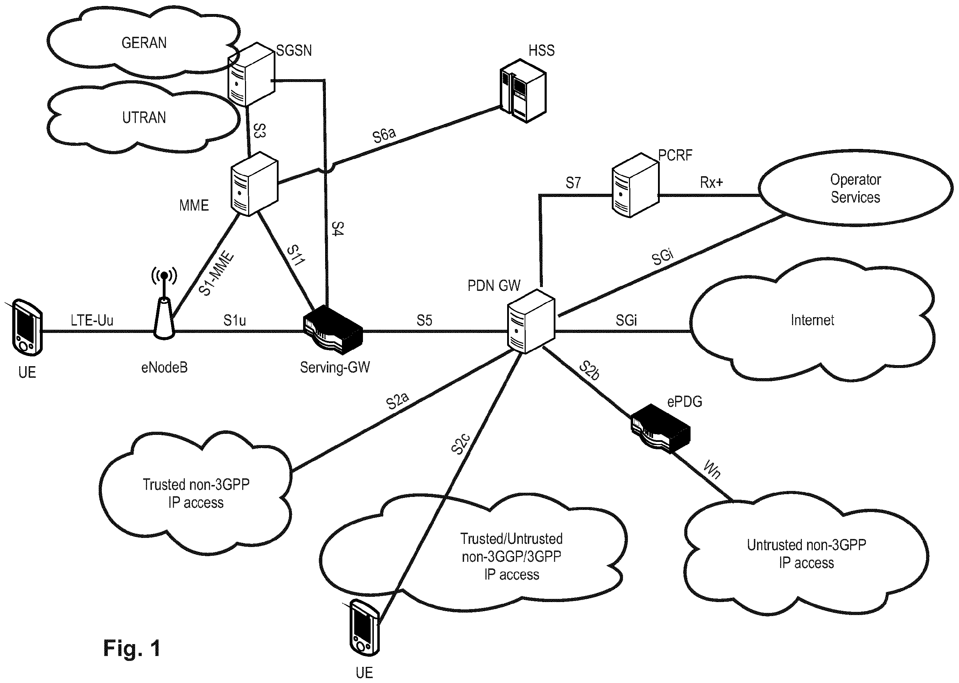

The overall LTE architecture is shown in Fig. 1. The E-UTRAN consists of an eNodeB, providing the E-UTRA user plane (PDCP/RLC/MAC/PHY) and control plane (RRC) protocol terminations towards the user equipment (UE). The eNodeB (eNB) hosts the Physical (PHY), Medium Access Control (MAC), Radio Link Control (RLC) and Packet Data Control Protocol (PDCP) layers that include the functionality of user-plane header compression and encryption. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression/decompression of downlink/uplink user plane packet headers. The eNodeBs are interconnected with each other by means of the X2 interface.

The eNodeBs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN GW). For idle-state user equipments, the SGW terminates the downlink data path and triggers paging when downlink data arrives for the user equipment. It manages and stores user equipment contexts, e.g. parameters of the IP bearer service, or network internal routing information. It also performs replication of the user traffic in case of lawful interception.

The MME is the key control-node for the LTE access-network. It is responsible for idle-mode user equipment tracking and paging procedure including retransmissions. It is involved in the bearer activation/deactivation process and is also responsible for choosing the SGW for a user equipment at the initial attach and at the time of intra-LTE handover involving Core Network (CN) node relocation. It is responsible for authenticating the user (by interacting with the HSS). The Non-Access Stratum (NAS) signaling terminates at the MME, and it is also responsible for the generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

## Component Carrier Structure in LTE

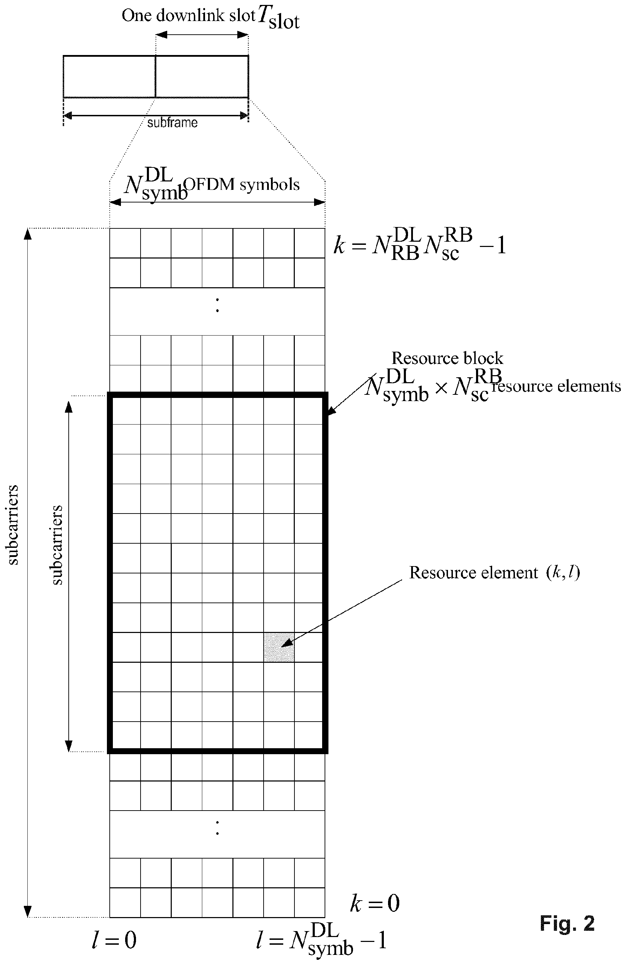

The downlink component carrier of a 3GPP LTE system is subdivided in the time-frequency domain in so-called subframes. In 3GPP LTE each subframe is divided into two downlink slots as shown in Fig. 2, wherein the first downlink slot comprises the control channel region (PDCCH region) within the first OFDM symbols. Each subframe consists of a give number of OFDM symbols in the time domain (12 or 14 OFDM symbols in 3GPP LTE (Release 8)), wherein each OFDM symbol spans over the entire bandwidth of the component carrier. The OFDM symbols thus each consist of a number of modulation symbols transmitted on respective subcarriers. In LTE, the transmitted signal in each slot is described by a resource grid of $N_{RB}^{DL} N_{sc}^{RB}$ subcarriers and $N_{symb}^{DL}$ OFDM symbols. $N_{RB}^{DL}$ is the number of resource blocks within the bandwidth. The quantity $N_{RB}^{DL}$ depends on the downlink transmission bandwidth configured in the cell and shall fulfill $N_{RB}^{min,DL} \leq N_{RB}^{DL} \leq N_{RB}^{max,DL}$, where $N_{RB}^{min,DL}=6$ and $N_{RB}^{max,DL}=110$ are respectively the smallest and the largest downlink bandwidths, supported by the current version of the specification. $N_{sc}^{RB}$ is the number of subcarriers within one resource block. For normal cyclic prefix subframe structure, $N_{sc}^{RB}=12$ and $N_{symb}^{DL} = 7$.

Assuming a multi-carrier communication system, e.g. employing OFDM, as for example used in 3GPP Long Term Evolution (LTE), the smallest unit of resources that can be assigned by the scheduler is one "resource block". A physical resource block (PRB) is defined as consecutive OFDM symbols in the time domain (e.g. 7 OFDM symbols) and consecutive subcarriers in the frequency domain as exemplified in Fig. 2 (e.g. 12 subcarriers for a component carrier). In 3GPP LTE (Release 8), a physical resource block thus consists of resource elements, corresponding to one slot in the time domain and 180 kHz in the frequency domain (for further details on the downlink resource grid, see for example 3GPP TS 36.211, "Evolved Universal Terrestrial Radio Access (E-UTRA); Physical Channels and Modulation (Release 8)", current version 13.0.0, section 6.2, available at http://www.3gpp.org).

One subframe consists of two slots, so that there are 14 OFDM symbols in a subframe when a so-called "normal" CP (cyclic prefix) is used, and 12 OFDM symbols in a subframe when a so-called "extended" CP is used. For sake of terminology, in the following the time-frequency resources equivalent to the same consecutive subcarriers spanning a full subframe is called a "resource block pair", or equivalent "RB pair" or "PRB pair".

The term "component carrier" refers to a combination of several resource blocks in the frequency domain. In future releases of LTE, the term "component carrier" is no longer used; instead, the terminology is changed to "cell", which refers to a combination of downlink and optionally uplink resources. The linking between the carrier frequency of the downlink resources and the carrier frequency of the uplink resources is indicated in the system information transmitted on the downlink resources.

Similar assumptions for the component carrier structure will apply to later releases too.

## Carrier Aggregation in LTE-A for support of wider bandwidth

The frequency spectrum for IMT-Advanced was decided at the World Radio communication Conference 2007 (WRC-07). Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced.

The bandwidth that the LTE-Advanced system is able to support is 100 MHz, while an LTE system can only support 20MHz. Nowadays, the lack of radio spectrum has become a bottleneck of the development of wireless networks, and as a result it is difficult to find a spectrum band which is wide enough for the LTE-Advanced system. Consequently, it is urgent to find a way to gain a wider radio spectrum band, wherein a possible answer is the carrier aggregation functionality.

In carrier aggregation, two or more component carriers are aggregated in order to support wider transmission bandwidths up to 100MHz. Several cells in the LTE system are aggregated into one wider channel in the LTE-Advanced system which is wide enough for 100 MHz even though these cells in LTE may be in different frequency bands.

All component carriers can be configured to be LTE Rel. 8/9 compatible, at least when the bandwidth of a component carrier does not exceed the supported bandwidth of an LTE Rel. 8/9 cell. Not all component carriers aggregated by a user equipment may necessarily be Rel. 8/9 compatible. Existing mechanisms (e.g. barring) may be used to avoid Rel-8/9 user equipments to camp on a component carrier.

A user equipment may simultaneously receive or transmit on one or multiple component carriers (corresponding to multiple serving cells) depending on its capabilities. An LTE-A Rel. 10 user equipment with reception and/or transmission capabilities for carrier aggregation can simultaneously receive and/or transmit on multiple serving cells, whereas an LTE Rel. 8/9 user equipment can receive and transmit on a single serving cell only, provided that the structure of the component carrier follows the Rel. 8/9 specifications.

Carrier aggregation is supported for both contiguous and non-contiguous component carriers with each component carrier limited to a maximum of 110 Resource Blocks in the frequency domain (using the 3GPP LTE (Release 8/9) numerology).

It is possible to configure a 3GPP LTE-A (Release 10)-compatible user equipment to aggregate a different number of component carriers originating from the same eNodeB (base station) and of possibly different bandwidths in the uplink and the downlink. The number of downlink component carriers that can be configured depends on the downlink aggregation capability of the UE. Conversely, the number of uplink component carriers that can be configured depends on the uplink aggregation capability of the UE. It may currently not be possible to configure a mobile terminal with more uplink component carriers than downlink component carriers. In a typical TDD deployment the number of component carriers and the bandwidth of each component carrier in uplink and downlink is the same. Component carriers originating from the same eNodeB need not provide the same coverage.

The spacing between centre frequencies of contiguously aggregated component carriers shall be a multiple of 300 kHz. This is in order to be compatible with the 100 kHz frequency raster of 3GPP LTE (Release 8/9) and at the same time to preserve orthogonality of the subcarriers with 15 kHz spacing. Depending on the aggregation scenario, the $n \times 300$ kHz spacing can be facilitated by insertion of a low number of unused subcarriers between contiguous component carriers.

The nature of the aggregation of multiple carriers is only exposed up to the MAC layer. For both uplink and downlink there is one HARQ entity required in MAC for each aggregated component carrier. There is (in the absence of SU-MIMO for uplink) at most one transport block per component carrier. A transport block and its potential HARQ retransmissions need to be mapped on the same component carrier.

When carrier aggregation is configured, the mobile terminal only has one RRC connection with the network. At RRC connection establishment/re-establishment, one cell provides the security input (one ECGI, one PCI and one ARFCN) and the non-access stratum mobility information (e.g. TAI) similarly as in LTE Rel. 8/9. After RRC connection establishment/re-establishment, the component carrier corresponding to that cell is referred to as the downlink Primary Cell (PCell). There is always one and only one downlink PCell (DL PCell) and one uplink PCell (UL PCell) configured per user equipment in connected state. Within the configured set of component carriers, other cells are referred to as Secondary Cells (SCells); with carriers of the SCell being the Downlink Secondary Component Carrier (DL SCC) and Uplink Secondary Component Carrier (UL SCC). Maximum five serving cells, including the PCell, can be configured for one UE.

The characteristics of the downlink and uplink PCell are:

- For each SCell the usage of uplink resources by the UE in addition to the downlink ones is configurable (the number of DL SCCs configured is therefore always larger or equal to the number of UL SCCs, and no SCell can be configured for usage of uplink resources only)

- The downlink PCell cannot be de-activated, unlike SCells

- Re-establishment is triggered when the downlink PCell experiences Rayleigh fading (RLF), not when downlink SCells experience RLF

- Non-access stratum information is taken from the downlink PCell

- PCell can only be changed with handover procedure (i.e. with security key change and RACH procedure)

- PCell is used for transmission of PUCCH

- The uplink PCell is used for transmission of Layer 1 uplink control information

- From a UE viewpoint, each uplink resource only belongs to one serving cell

The configuration and reconfiguration, as well as addition and removal, of component carriers can be performed by RRC. Activation and deactivation is done via MAC control elements. At intra-LTE handover, RRC can also add, remove, or reconfigure SCells for usage in the target cell. When adding a new SCell, dedicated RRC signaling is used for sending the system information of the SCell, the information being necessary for transmission/reception (similarly as in Rel-8/9 for handover). Each SCell is configured with a serving cell index, when the SCell is added to one UE; PCell has always the serving cell index 0.

When a user equipment is configured with carrier aggregation there is at least one pair of uplink and downlink component carriers that is always active. The downlink component carrier of that pair might be also referred to as 'DL anchor carrier'. Same applies also for the uplink.

When carrier aggregation is configured, a user equipment may be scheduled on multiple component carriers simultaneously, but at most one random access procedure shall be ongoing at any time. Cross-carrier scheduling allows the PDCCH of a component carrier to schedule resources on another component carrier. For this purpose a component carrier identification field is introduced in the respective DCI (Downlink Control Information) formats, called CIF.

A linking, established by RRC signaling, between uplink and downlink component carriers allows identifying the uplink component carrier for which the grant applies when there is no cross-carrier scheduling. The linkage of downlink component carriers to uplink component carrier does not necessarily need to be one to one. In other words, more than one downlink component carrier can link to the same uplink component carrier. At the same time, a downlink component carrier can only link to one uplink component carrier.

### MAC layer/entity, RRC layer, Physical layer

The LTE layer 2 user-plane/control-plane protocol stack comprises four sublayers, RRC, PDCP, RLC and MAC. The Medium Access Control (MAC) layer is the lowest sublayer in the Layer 2 architecture of the LTE radio protocol stack and is defined by e.g. the 3GPP technical standard TS 36.321, current version 13.0.0. The connection to the physical layer below is through transport channels, and the connection to the RLC layer above is through logical channels. The MAC layer therefore performs multiplexing and demultiplexing between logical channels and transport channels: the MAC layer in the transmitting side constructs MAC PDUs, known as transport blocks, from MAC SDUs received through logical channels, and the MAC layer in the receiving side recovers MAC SDUs from MAC PDUs received through transport channels.

The MAC layer provides a data transfer service (see subclauses 5.4 and 5.3 of TS 36.321) for the RLC layer through logical channels, which are either control logical channels which carry control data (e.g. RRC signaling) or traffic logical channels which carry user plane data. The following control logical channels are defined: broadcast control channel (BCCH), paging control channel (PCCH), common control channel (CCCH), multicast control channel (MCCH), and dedicated control channel (DCCH). The traffic logical channels are the dedicated traffic channel (DTCH) and the multicast traffic channel (MTCH).

The logical channels are associated with one out of four different Logical Channel Groups (LCGs) with the LCG IDs 0-3, e.g. for the purpose of buffer status reporting.

On the other hand, the data from the MAC layer is exchanged with the physical layer through transport channels, which are classified as downlink or uplink. Data is multiplexed into transport channels depending on how it is transmitted over the air. The following downlink transport channels are defined: Broadcast channel (BCH), downlink shared channel (DL-SCH), paging channel (PCH), and multicast channel (MCH). The following uplink transport channels are defined: uplink shared channel (UL-SCH) and random access channel (RACH). Further information regarding the logical channels and the transport channels and their mapping in between can be found in the 3GPP technical standard 36.321, current version 13.0.0 in clause 4.5 "Channel Structure".

The Physical layer is responsible for the actual transmission of data and control information via the air interface, i.e. the Physical Layer carries all information from the MAC transport channels over the air interface on the transmission side. Some of the important functions performed by the Physical layer include coding and modulation, link adaptation (AMC), power control, cell search (for initial synchronization and handover purposes) and other measurements (inside the LTE system and between systems) for the RRC layer. The Physical layer performs transmissions based on transmission parameters, such as the modulation scheme, the coding rate (i.e. the modulation and coding scheme, MCS), the number of physical resource blocks etc. More information on the functioning of the physical layer can be found in the 3GPP technical standard 36.213 current version 13.0.0.

The Radio Resource Control (RRC) layer controls communication between a UE and an eNB at the radio interface and the mobility of a UE moving across several cells. The RRC protocol also supports the transfer of NAS information. For UEs in RRC_IDLE, RRC supports notification from the network of incoming calls. RRC connection control covers all procedures related to the establishment, modification and release of an RRC connection, including paging, measurement configuration and reporting, radio resource configuration, initial security activation, and establishment of Signalling Radio Bearer (SRBs) and of radio bearers carrying user data (Data Radio Bearers, DRBs).

In a mobile network using the Long Term Evolution (LTE) architecture, bearers are the "tunnels" used to connect the user equipment to Packet Data Networks (PDNs) such as the Internet. In an LTE Network, QoS is implemented between UE and PDN Gateway and is applied to a set of bearers. 'Bearer' is basically a virtual concept and a set of network configuration to provide special treatment to a set of traffic, e.g. VoIP packets are prioritized by the network compared to web-browser traffic. Essentially, each stream of different characteristics (e.g. delay, delivery time, throughput, SNR, error-rate jitter etc.) is mapped to different bearers. Thus, a bearer is a unit of QoS control, and one bearer is used to fulfill one set of QoS requirements. In LTE, QoS is applied on the radio bearer, the S1 bearer and the S5/S8 bearer, collectively called an EPS bearer. There are two types of radio bearers in LTE: signaling radio bearers (SRB) which carrier control signaling, e.g. RRC signaling/NAS information (there are types of SRB in LTE: SRB0, SRB1 and SRB2), and data radio bearer (DRBs) which carry user plane traffic/data. A UE supports up to 8 DRBs.

## Uplink Access scheme for LTE

For uplink transmission, power-efficient user-terminal transmission is necessary to maximize coverage. Single-carrier transmission combined with FDMA with dynamic bandwidth allocation has been chosen as the evolved UTRA uplink transmission scheme. The main reason for the preference for single-carrier transmission is the lower peak-to-average power ratio (PAPR), compared to multi-carrier signals (OFDMA), and the corresponding improved power-amplifier efficiency and improved coverage (higher data rates for a given terminal peak power). During each time interval, Node B assigns users a unique time/frequency resource for transmitting user data, thereby ensuring intra-cell orthogonality. An orthogonal access in the uplink promises increased spectral efficiency by eliminating intra-cell interference. Interference due to multipath propagation is handled at the base station (Node B), aided by insertion of a cyclic prefix in the transmitted signal.

The basic physical resource used for data transmission consists of a frequency resource of size BWgrant during one time interval, e.g. a subframe, onto which coded information bits are mapped. It should be noted that a subframe, also referred to as transmission time interval (TTI), is the smallest time interval for user data transmission. It is however possible to assign a frequency resource BWgrant over a longer time period than one TTI to a user by concatenation of subframes.

## Layer 1 / Layer 2 Control Signaling

In order to inform the scheduled users about their allocation status, transport format, and other transmission-related information (e.g. HARQ information, transmit power control (TPC) commands), L1/L2 control signaling is transmitted on the downlink along with the data. L1/L2 control signaling is multiplexed with the downlink data in a subframe, assuming that the user allocation can change from subframe to subframe. It should be noted that user allocation might also be performed on a TTI (Transmission Time Interval) basis, where the TTI length can be a multiple of the subframes. The TTI length may be fixed in a service area for all users, may be different for different users, or may even by dynamic for each user. Generally, the L1/2 control signaling needs only be transmitted once per TTI. Without loss of generality, the following assumes that a TTI is equivalent to one subframe.

The L1/L2 control signaling is transmitted on the Physical Downlink Control Channel (PDCCH). A PDCCH carries a message as a Downlink Control Information (DCI), which in most cases includes resource assignments and other control information for a mobile terminal or groups of UEs. Several PDCCHs can be transmitted in one subframe.

Generally, the information sent in the L1/L2 control signaling for assigning uplink or downlink radio resources (particularly LTE(-A) Release 10) can be categorized to the following items:

- User identity, indicating the user that is allocated. This is typically included in the checksum by masking the CRC with the user identity;
- Resource allocation information, indicating the resources (e.g. Resource Blocks, RBs) on which a user is allocated. Alternatively, this information is termed resource block assignment (RBA). Note, that the number of RBs on which a user is allocated can be dynamic;
- Carrier indicator, which is used if a control channel transmitted on a first carrier assigns resources that concern a second carrier, i.e. resources on a second carrier or resources related to a second carrier; (cross carrier scheduling);
- Modulation and coding scheme that determines the employed modulation scheme and coding rate;
- HARQ information, such as a new data indicator (NDI) and/or a redundancy version (RV) that is particularly useful in retransmissions of data packets or parts thereof;
- Power control commands to adjust the transmit power of the assigned uplink data or control information transmission;
- Reference signal information such as the applied cyclic shift and/or orthogonal cover code index, which are to be employed for transmission or reception of reference signals related to the assignment;
- Uplink or downlink assignment index that is used to identify an order of assignments, which is particularly useful in TDD systems;
- Hopping information, e.g. an indication whether and how to apply resource hopping in order to increase the frequency diversity;
- CSI request, which is used to trigger the transmission of channel state information in an assigned resource; and
- Multi-cluster information, which is a flag used to indicate and control whether the transmission occurs in a single cluster (contiguous set of RBs) or in multiple clusters (at least two non-contiguous sets of contiguous RBs). Multi-cluster allocation has been introduced by 3GPP LTE-(A) Release 10.

It is to be noted that the above listing is non-exhaustive, and not all mentioned information items need to be present in each PDCCH transmission depending on the DCI format that is used.

Downlink control information occurs in several formats that differ in overall size and also in the information contained in their fields as mentioned above. The different DCI formats that are currently defined for LTE are as follows and described in detail in 3GPP TS 36.212, "Multiplexing and channel coding", section 5.3.3.1 (current version v13.0.0 available at http://www.3gpp.org).

- **Format 5:** DCI format 5 is used for the scheduling of the PSCCH (Physical Sidelink Control Channel), and also contains several SCI format 0 fields used for the scheduling of the PSSCH (Physical Sidelink Shared Control Channel). If the number of information bits in DCI format 5 mapped onto a given search space is less than the payload size of format 0 for scheduling the same serving cell, zeros shall be appended to format 5 until the payload size equals that of format 0 including any padding bits appended to format 0.

The 3GPP technical standard TS 36.212, current version 13.0.0, defines in subclause 5.4.3, control information for the sidelink; for detailed information on sidelink see later.

SCI may transport sidelink scheduling information for one destination ID. SCI Format 0 is defined for use for the scheduling of the PSSCH. The following information is transmitted by means of the SCI format 0:

• Frequency hopping flag - 1 bit.
• Resource block assignment and hopping resource allocation
• Time resource pattern - 7 bits.
• Modulation and coding scheme - 5 bits.
• Timing advance indication - 11 bits
• Group destination ID - 8 bits

**Logical Channel Prioritization, LCP, procedure**

For the uplink, the process by which a UE creates a MAC PDU to be transmitted using the allocated radio resources is fully standardized; the LCP procedure is designed to ensure that the UE satisfies the QoS of each configured radio bearer in a way which is optimal and consistent between different UE implementations. Based on the uplink transmission resource grant message signalled on the PDCCH, the UE has to decide on the amount of data for each logical channel to be included in the new MAC PDU and, if necessary, also to allocate space for a MAC Control Element.

In constructing a MAC PDU with data from multiple logical channels, the simplest and most intuitive method is the absolute priority-based method, where the MAC PDU space is allocated to logical channels in decreasing order of logical channel priority. This is, data from the highest priority logical channel is served first in the MAC PDU, followed by data from the next highest priority logical channel, continuing until the MAC PDU space runs out. Although the absolute priority-based method is quite simple in terms of UE implementation, it sometimes leads to starvation of data from low-priority logical channels. Starvation means that the data from the low-priority logical channels cannot be transmitted because the data from high-priority logical channels takes up all the MAC PDU space.

In LTE, a Prioritized Bit Rate (PBR) is defined for each logical channel, in order to transmit data in order of importance but also to avoid starvation of data with lower priority. The PBR is the minimum data rate guaranteed for the logical channel. Even if the logical channel has low priority, at least a small amount of MAC PDU space is allocated to guarantee the PBR. Thus, the starvation problem can be avoided by using the PBR.

The Logical Channel Prioritization is standardized e.g. in 3GPP TS 36.321, current version v13.0.0, in subclause 5.4.3.1. The Logical Channel Prioritization (LCP) procedure is applied when a new transmission is performed.

**LTE Device to Device (D2D) Proximity Services (ProSe)**

Proximity-based applications and services represent an emerging social-technological trend. The identified areas include services related to commercial services and Public Safety that would be of interest to operators and users. The introduction of a Proximity Services (ProSe) capability in LTE would allow the 3GPP industry to serve this developing market and will, at the same time, serve the urgent needs of several Public Safety communities that are jointly committed to LTE.

Device-to-Device (D2D) communication is a technology component introduced by LTE-Rel.12, which allows D2D as an underlay to the cellular network to increase the spectral efficiency. For example, if the cellular network is LTE, all data-carrying physical channels use SC-FDMA for D2D signaling. In D2D communications, user equipments transmit data signals to each other over a direct link using the cellular resources instead of through the radio base station. Throughout the invention the terms "D2D", "ProSe" and "sidelink" are interchangeable.

**D2D communication in LTE**

The D2D communication in LTE is focusing on two areas: Discovery and Communication. ProSe (Proximity-based Services) Direct Discovery is defined as the procedure used by the ProSe-enabled UE to discover other ProSe-enabled UE(s) in its proximity using E-UTRA direct radio signals via the PC5 interface.

In D2D communication, UEs transmit data signals to each other over a direct link using the cellular resources instead of through the base station (BS). D2D users communicate directly while remaining controlled under the BS, i.e. at least when being in coverage of an eNB. Therefore, D2D can improve system performance by reusing cellular resources.

It is assumed that D2D operates in the uplink LTE spectrum (in the case of FDD) or uplink subframes of the cell giving coverage (in case of TDD, except when out of coverage). Furthermore, D2D transmission/reception does not use full duplex on a given carrier. From individual UE perspective, on a given carrier D2D signal reception and LTE uplink transmission do not use full duplex, i.e. no simultaneous D2D signal reception and LTE UL transmission is possible.

In D2D communication, when one particular UE1 has a role of transmission (transmitting user equipment or transmitting terminal), UE1 sends data, and another UE2 (receiving user equipment) receives it. UE1 and UE2 can change their transmission and reception role. The transmission from UE1 can be received by one or more UEs like UE2.

### ProSe direct communication layer-2 link

In brief, ProSe direct one-to-one communication is realised by establishing a secure layer-2 link over PC5 between two UEs. Each UE has a Layer-2 ID for unicast communication that is included in the Source Layer-2 ID field of every frame that it sends on the layer-2 link and in the Destination Layer-2 ID of every frame that it receives on the layer-2 link. The UE needs to ensure that the Layer-2 ID for unicast communication is at least locally unique. So the UE should be prepared to handle Layer-2 ID conflicts with adjacent UEs using unspecified mechanisms (e.g. self-assign a new Layer-2 ID for unicast communication when a conflict is detected). The layer-2 link for ProSe direct communication one-to-one is identified by the combination of the Layer-2 IDs of the two UEs. This means that the UE can engage in multiple layer-2 links for ProSe direct communication one-to-one using the same Layer-2 ID.

ProSe direct communication one-to-one is composed of the following procedures as explained in detail in TR 23.713 current version v13.0.0 section 7.1.2:

- Establishment of a secure layer-2 link over PC5.
- IP address/prefix assignment.
- Layer-2 link maintenance over PC5.
- Layer-2 link release over PC5.

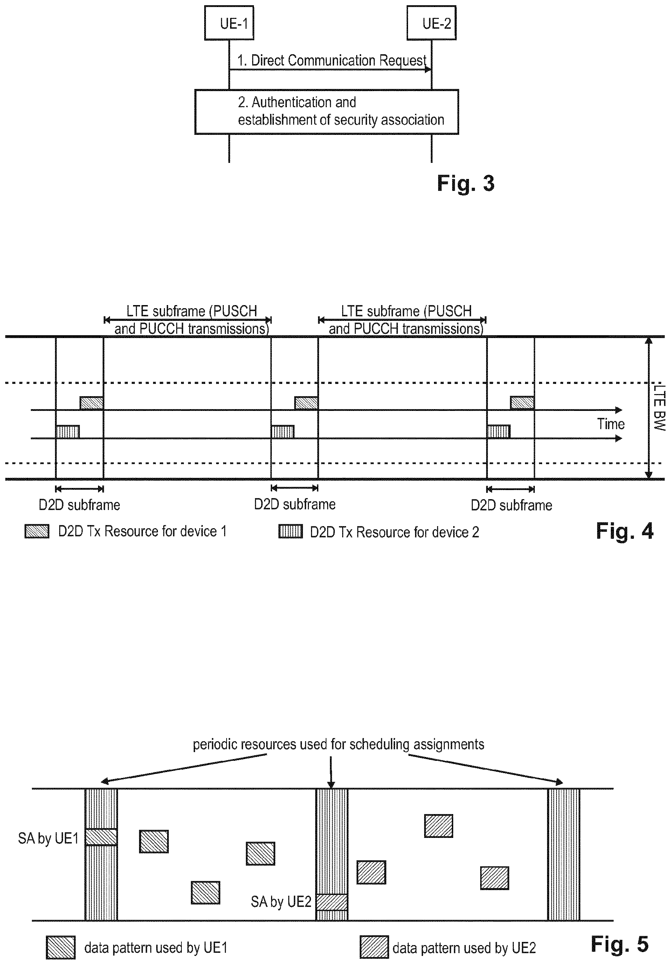

Fig. 3 illustrates how to establish a secure layer-2 link over the PC5 interface.

1. UE-1 sends a Direct Communication Request message to UE-2 in order to trigger mutual authentication. The link initiator (UE-1) needs to know the Layer-2 ID of the peer (UE-2) in order to perform step 1. As an example, the link initiator may learn the Layer-2 ID of the peer by executing a discovery procedure first or by having participated in ProSe one-to-many communication including the peer.

2. UE-2 initiates the procedure for mutual authentication. The successful completion of the authentication procedure completes the establishment of the secure layer-2 link over PC5.

UEs engaging in isolated (non-relay) one-to-one communication may also use link-local addresses. The PC5 Signalling Protocol shall support keep-alive functionality that is used to detect when the UEs are not in ProSe Communication range, so that they can proceed with implicit layer-2 link release. The Layer-2 link release over the PC5 can be performed by using a Disconnect Request message transmitted to the other UE, which also deletes all associated context data. Upon reception of the Disconnect Request message, the other UE responds with a Disconnect Response message and deletes all context data associated with the layer-2 link.

### ProSe Direct Communication Related identities

3GPP TS 36.300, current version 13.2.0, defines in subclause 8.3 the following identities to use for ProSe Direct Communication:

- SL-RNTI: Unique identification used for ProSe Direct Communication Scheduling;

- Source Layer-2 ID: Identifies the sender of the data in sidelink ProSe Direct Communication. The Source Layer-2 ID is 24 bits long and is used together with ProSe Layer-2 Destination ID and LCID for identification of the RLC UM entity and PDCP entity in the receiver;

- Destination Layer-2 ID: Identifies the target of the data in sidelink ProSe Direct Communication. The Destination Layer-2 ID is 24 bits long and is split in the MAC layer into two bit strings:

    One bit string is the LSB part (8 bits) of Destination Layer-2 ID and forwarded to the physical layer as Sidelink Control Layer-1 ID. This identifies the target of the intended data in Sidelink Control and is used for filtering packets at the physical layer.

    Second bit string is the MSB part (16 bits) of the Destination Layer -2 ID and is carried within the MAC header. This is used for filtering packets at the MAC layer.

No Access Stratum signalling is required for group formation and to configure Source Layer-2 ID, Destination Layer-2 ID and Sidelink Control L1 ID in the UE. These identities are either provided by a higher layer or derived from identities provided by a higher layer. In case of groupcast and broadcast, the ProSe UE ID provided by the higher layer is used directly as the Source Layer-2 ID, and the ProSe Layer-2 Group ID provided by the higher layer is used directly as the Destination Layer-2 ID in the MAC layer. In case of one-to-one communications, higher layer provides Source Layer-2 ID and Destination Layer-2 ID.

**Radio Resource Allocation for Proximity Services**

From the perspective of a transmitting UE, a Proximity-Services-enabled UE (ProSe-enabled UE) can operate in two modes for resource allocation: **Mode 1** refers to the eNB-scheduled resource allocation, where the UE requests transmission resources from the eNB (or Release-10 relay node), and the eNodeB (or Release-10 relay node) in turn schedules the resources used by a UE to transmit direct data and direct control information (e.g. Scheduling Assignment). The UE needs to be RRC_CONNECTED in order to transmit data. In particular, the UE sends a scheduling request (D-SR or Random Access) to the eNB followed by a buffer status report (BSR) in the usual manner (see also following chapter "Transmission procedure for D2D communication"). Based on the BSR, the eNB can determine that the UE has data for a ProSe Direct Communication transmission and can estimate the resources needed for transmission.

On the other hand, **Mode 2** refers to the UE-autonomous resource selection, where a UE on its own selects resources (time and frequency) from resource pool(s) to transmit direct data and direct control information (i.e. SA). One resource pool is defined e.g. by the content of SIB18, namely by the field commTxPoolNormalCommon, this particular resource pool being broadcast in the cell and then commonly available for all UEs in the cell still in RRC_Idle state. Effectively, the eNB may define up to four different instances of said pool, respectively four resource pools for the transmission of SA messages and direct data. However, in Rel-12 a UE shall always use the first resource pool defined in the list, even if it was configured with multiple resource pools. This restriction was removed for Rel-13, i.e. a UE can transmit on multiple of the configured resource pools within one SC period. How the UE selects the resource pools for transmission is further outlined below (further specified in TS36.321).

As an alternative, another resource pool can be defined by the eNB and signaled in SIB18, namely by using the field commTxPoolExceptional, which can be used by the UEs in exceptional cases.

What resource allocation mode a UE is going to use is configurable by the eNB. Furthermore, what resource allocation mode a UE is going to use for D2D data communication may also depend on the RRC state, i.e. RRC_IDLE or RRC_CONNECTED, and the coverage state of the UE, i.e. in-coverage, out-of-coverage. A UE is considered in-coverage if it has a serving cell (i.e. the UE is RRC_CONNECTED or is camping on a cell in RRC_IDLE).

The following rules with respect to the resource allocation mode apply for the UE:

- If the UE is out-of-coverage, it can only use Mode 2;
- If the UE is in-coverage, it may use Mode 1 if the eNB configures it accordingly;
- If the UE is in-coverage, it may use Mode 2 if the eNB configures it accordingly;
- When there are no exceptional conditions, UE may change from Mode 1 to Mode 2 or vice-versa only if it is configured by eNB to do so. If the UE is in-coverage, it shall use only the mode indicated by eNB configuration unless one of the exceptional cases occurs;
  ∘ The UE considers itself to be in exceptional conditions e.g. while T311 or T301 is running;
- When an exceptional case occurs the UE is allowed to use Mode 2 temporarily even though it was configured to use Mode 1.

While being in the coverage area of an E-UTRA cell, the UE shall perform ProSe Direct Communication Transmission on the UL carrier only on the resources assigned by that cell, even if resources of that carrier have been pre-configured e.g. in UICC (Universal Integrated Circuit Card).

For UEs in RRC_IDLE the eNB may select one of the following options:

- The eNB may provide a Mode 2 transmission resource pool in SIB. UEs that are authorized for ProSe Direct Communication use these resources for ProSe Direct Communication in RRC_IDLE;
- The eNB may indicate in SIB that it supports D2D but does not provide resources for ProSe Direct Communication. UEs need to enter RRC_CONNECTED to perform ProSe Direct Communication transmission.

For UEs in RRC_CONNECTED:

- A UE in RRC_CONNECTED that is authorized to perform ProSe Direct Communication transmission, indicates to the eNB that it wants to perform ProSe Direct Communication transmissions when it needs to perform ProSe Direct Communication transmission;
- The eNB validates whether the UE in RRC_CONNECTED is authorized for ProSe Direct Communication transmission using the UE context received from MME;
- The eNB may configure a UE in RRC_CONNECTED by dedicated signalling with a Mode-2 resource allocation transmission resource pool that may be used without constraints while the UE is RRC_CONNECTED. Alternatively, the eNB may configure a UE in RRC_CONNECTED by dedicated signalling with a Mode 2 resource allocation transmission resource pool which the UE is allowed to use only in exceptional cases and rely on Mode 1 otherwise.

The resource pool for Scheduling Assignment when the UE is out of coverage can be configured as below:

- The resource pool used for reception is pre-configured.
- The resource pool used for transmission is pre-configured.

The resource pool for Scheduling Assignment when the UE is in coverage can be configured as below:

- The resource pool used for reception is configured by the eNB via RRC, in dedicated or broadcast signalling.
- The resource pool used for transmission is configured by the eNB via RRC if Mode 2 resource allocation is used
- The SCI (Sidelink Control Information) resource pool (also referred to as Scheduling Assignment, SA, resource pool) used for transmission is not known to the UE if Mode 1 resource allocation is used.
- The eNB schedules the specific resource(s) to use for Sidelink Control Information (Scheduling Assignment) transmission if Mode 1 resource allocation is used. The specific resource assigned by the eNB is within the resource pool for reception of SCI that is provided to the UE.

Fig. 4 illustrates the use of transmission/reception resources for overlay (LTE) and underlay (D2D) system.

Basically, the eNodeB controls whether UE may apply the Mode 1 or Mode 2 transmission. Once the UE knows its resources where it can transmit (or receive) D2D communication, it uses the corresponding resources only for the corresponding transmission/reception. For example, in Fig.4 the D2D subframes will only be used to receive or transmit the D2D signals. Since the UE as a D2D device would operate in Half Duplex mode, it can either receive or transmit the D2D signals at any point of time. Similarly, the other subframes illustrated in Fig. 4 can be used for LTE (overlay) transmissions and/or reception.

**Transmission procedure for D2D communication**

The D2D data transmission procedure differs depending on the resource allocation mode. As described above for Mode 1, the eNB explicitly schedules the resources for the Scheduling Assignment and the D2D data communication after a corresponding request from the UE. Particularly, the UE may be informed by the eNB that D2D communication is generally allowed, but that no Mode 2 resources (i.e. resource pool) are provided; this may be done e.g. with the exchange of the D2D communication Interest Indication by the UE and the corresponding response, D2D Communication Response, where the corresponding exemplary ProseCommConfig information element would not include the commTxPoolNormalCommon, meaning that a UE that wants to start direct communication involving transmissions has to request E-UTRAN to assign resources for each individual transmission. Thus, in such a case, the UE has to request the resources for each individual transmission, and in the following the different steps of the request/grant procedure are exemplarily listed for this Mode 1 resource allocation:

- Step 1: UE sends SR (Scheduling Request) to eNB via PUCCH;
- Step 2: eNB grants UL resource (for UE to send BSR) via PDCCH, scrambled by C-RNTI;
- Step 3: UE sends D2D BSR indicating the buffer status via PUSCH;
- Step 4: eNB grants D2D resource (for UE to send data) via PDCCH, scrambled by D2D-RNTI.
- Step 5: D2D Tx UE transmits SA/D2D data according to grant received in step 4.

A Scheduling Assignment (SA), also termed SCI (Sidelink Control Information) is a compact (low-payload) message containing control information, e.g. pointer(s) to time-frequency resources, modulation and coding scheme and Group Destination ID for the corresponding D2D data transmission. An SCI transports the sidelink scheduling information for one (ProSE) destination ID. The content of the SA (SCI) is basically in accordance with the grant received in Step 4 above. The D2D grant and SA content (i.e. SCI content) are defined in the 3GPP technical standard 36.212, current version 13.0.0, subclause 5.4.3, defining in particular the SCI format 0 (see content of SCI format 0 above).

On the other hand, for Mode 2 resource allocation, above steps 1-4 are basically not necessary, and the UE autonomously selects resources for the SA and D2D data transmission from the transmission resource pool(s) configured and provided by the eNB.

Fig. 5 exemplarily illustrates the transmission of the Scheduling Assignment and the D2D data for two UEs, UE-1 and UE-2, where the resources for sending the scheduling assignments are periodic, and the resources used for the D2D data transmission are indicated by the corresponding Scheduling Assignment.

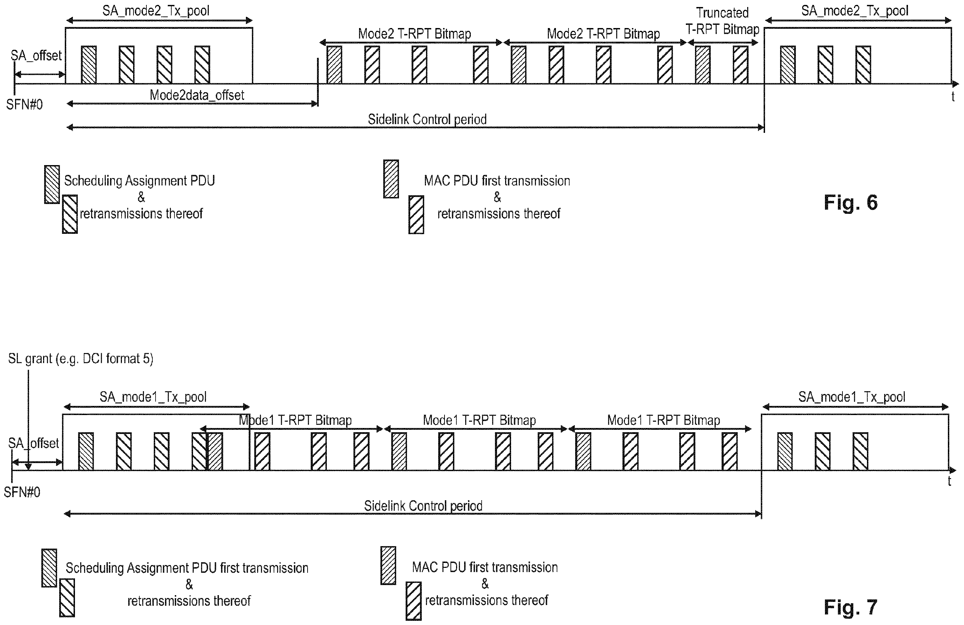

Fig. 6 illustrates the D2D communication timing for Mode 2, autonomous scheduling, during one SA/data period, also known as SC period, Sidelink Control period. Fig. 7 illustrates the D2D communication timing for Mode 1, eNB-scheduled allocation during one SA/data period. A SC period is the time period consisting of transmission of a Scheduling Assignment and its corresponding data. As can be seen from Fig. 6, the UE transmits after an SA-offset time, a Scheduling Assignment using the transmission pool resources for scheduling assignments for Mode 2, SA_Mode2_Tx_pool. The 1st transmission of the SA is followed e.g. by three retransmissions of the same SA message. Then, the UE starts the D2D data transmission, i.e. more in particular the T-RPT bitmap/pattern, at some configured offset (Mode2data_offset) after the first subframe of the SA resource pool (given by the SA_offset). One D2D data transmission of a MAC PDU (i.e. a transport block) consists of its 1st initial transmission and several retransmissions. For the illustration of Fig. 6 (and of Fig. 7) it is assumed that three retransmissions are performed (i.e. 2nd, 3rd, and 4th transmission of the same MAC PDU). The Mode2 T-RPT Bitmap (time resource pattern of transmission, T-RPT) basically defines the timing of the MAC PDU transmission (1st transmission) and its retransmissions ($2^{nd}$, $3^{rd}$, and $4^{th}$ transmission). The SA pattern basically defines the timing of the SA's initial transmission and its retransmissions ($2^{nd}$, $3^{rd}$, and $4^{th}$ transmission).

As currently specified in the standard, for one sidelink grant, e.g. either sent by the eNB or selected by the UE itself, , the UE can transmit multiple transport blocks, MAC PDUs, (only one per subframe (TTI), i.e. one after the other), however to only one ProSe destination group. Also the retransmissions of one transport block must be finished before the first transmission of the next transport block starts, i.e. only one HARQ process is used per sidelink grant for the transmission of the multiple transport blocks. Furthermore, the UE can have and use several sidelink grants per SC period, but a different ProSe destination be selected for each of them. Thus, in one SC period the UE can transmit data to one ProSe destination only one time.

As apparent from Fig. 7, for the eNB-scheduled resource allocation mode (Mode 1), the D2D data transmission, i.e. more in particular the T-RPT pattern/bitmap, starts in the next UL subframe after the last SA transmission repetition in the SA resource pool. As explained already for Fig. 6, the Mode1 T-RPT Bitmap (time resource pattern of transmission, T-RPT) basically defines the timing of the MAC PDU transmission (1st transmission) and its retransmissions (2nd, 3rd, and 4th transmission).

The sidelink data transmission procedure can be found in the 3GPP standard document TS 36.321 v13.0.0, section 5.14. Therein, the Mode-2 autonomous resource selection is described in detail, differentiating between being configured with a single radio resource pool or multiple radio resource pools. The following steps are taken from said section of TS 36.321, assuming Mode-2 autonomous resource selection:

In order to transmit on the SL-SCH (sidelink shared channel) the MAC entity must have at least one sidelink grant. Sidelink grants are selected as follows:

If the MAC entity is configured by upper layers to transmit using one or multiple pool(s) of resources and more data is available in STCH (sidelink traffic channel) than can be transmitted in the current SC period, the MAC entity shall for each sidelink grant to be selected:

- if configured by upper layers to use a single pool of resources:

  - select that pool of resources for use;

- else, if configured by upper layers to use multiple pools of resources:

  - select a pool of resources for use from the pools of resources configured by upper layers whose associated priority list includes the priority of the highest priority of the sidelink logical channel in the MAC PDU to be transmitted;

NOTE: If more than one pool of resources has an associated priority list which includes the priority of the sidelink logical channel with the highest priority in the MAC PDU to be transmitted, it is left for UE implementation which one of those pools of resources to select.

- randomly select the time and frequency resources for SL-SCH and SCI of a sidelink grant from the selected resource pool. The random function shall be such that each of the allowed selections can be chosen with equal probability;
- use the selected sidelink grant to determine the set of subframes in which transmission of SCI and transmission of first transport block occur according to subclause 14.2.1 of TS 36.213 (this step refers to the selection of a T-RPT and a SA pattern, as explained in connection with Fig. 7);
- consider the selected sidelink grant to be a configured sidelink grant occurring in those subframes starting at the beginning of the first available SC Period which starts at least 4 subframes after the subframe in which the sidelink grant was selected;
- clear the configured sidelink grant at the end of the corresponding SC Period;

NOTE: Retransmissions on SL-SCH cannot occur after the configured sidelink grant has been cleared.

NOTE: If the MAC entity is configured by upper layers to transmit using one or multiple pool(s) of resources, it is left for UE implementation how many sidelink grants to select within one SC period taking the number of sidelink processes into account.

The MAC entity shall for each subframe:

- if the MAC entity has a configured sidelink grant occurring in this subframe:

  - if the configured sidelink grant corresponds to transmission of SCI:

    - instruct the physical layer to transmit SCI corresponding to the configured sidelink grant.

- else if the configured sidelink grant corresponds to transmission of first transport block:

    - deliver the configured sidelink grant and the associated HARQ information to the Sidelink HARQ Entity for this subframe.

NOTE: If the MAC entity has multiple configured grants occurring in one subframe and if not all of them can be processed due to the single-cluster SC-FDM restriction, it is left for UE implementation which one of these to process according to the procedure above.

The above text taken from the 3GPP technical standard can be clarified further. For example, the step of randomly selecting the time and frequency resources is random as to which particular time/frequency resources are chosen but is e.g. not random as to the amount of time/frequency resources selected in total. The amount of resources selected from the resource pool depends on the amount of data that is to be transmitted with said sidelink grant to be selected autonomously. In turn, the amount of data that is to be transmitted depends on the previous step of selecting the ProSe destination group and the corresponding amount of data ready for transmission destined to said ProSe destination group. As described later in the sidelink LCP procedure, the ProSe destination is selected first.

Furthermore, the sidelink process associated with the sidelink HARQ entity is responsible for instructing the physical layer to generate and perform a transmission accordingly, as apparent from section 5.14.1.2.2 of 3GPP TS 36.321 v13.0.0. In brief, after determining the sidelink grant and the sidelink data to transmit, the physical layer takes care that the sidelink data is actually transmitted, based on the sidelink grant and the necessary transmission parameters.

**ProSe network architecture and ProSe entities**

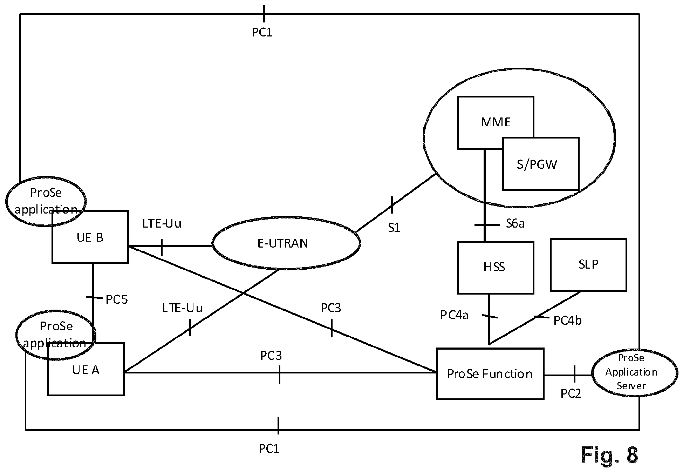

Fig. 8 illustrates a high-level exemplary architecture for a non-roaming case, including different ProSe applications in the respective UEs A and B, as well as a ProSe Application Server and ProSe function in the network. The example architecture of Fig. 8 is taken from TS 23.303 v.13.0.0 chapter 4.2 "Architectural Reference Model".

The functional entities are presented and explained in detail in TS 23.303 subclause 4.4 "Functional Entities". The ProSe function is the logical function that is used for network-related actions required for ProSe and plays different roles for each of the features of ProSe. The ProSe function is part of the 3GPP's EPC and provides all relevant network services like authorization, authentication, data handling etc. related to proximity services. For ProSe direct discovery and communication, the UE may obtain a specific ProSe UE identity, other configuration information, as well as authorization from the ProSe function over the PC3 reference point. There can be multiple ProSe functions deployed in the network, although for ease of illustration a single ProSe function is presented. The ProSe function consists of three main sub-functions that perform different roles depending on the ProSe feature: Direct Provision Function (DPF), Direct Discovery Name Management Function, and EPC-level Discovery Function. The DPF is used to provision the UE with the necessary parameters to use ProSe Direct Discovery and ProSe Direct Communication.

The term "UE" used in said connection refers to a ProSe-enabled UE supporting ProSe functionality, such as:

- Exchange of ProSe control information between ProSe-enabled UE and the ProSe Function over PC3 reference point.
- Procedures for open ProSe Direct Discovery of other ProSe-enabled UEs over PC5 reference point.
- Procedures for one-to-many ProSe Direct Communication over PC5 reference point.
- Procedures to act as a ProSe UE-to-Network Relay. The Remote UE communicates with the ProSe UE-to-Network Relay over PC5 reference point. The ProSe UE-to Network Relay uses layer-3 packet forwarding.
- Exchange of control information between ProSe UEs over PC5 reference point, e.g. for UE-to-Network Relay detection and ProSe Direct Discovery.
- Exchange of ProSe control information between another ProSe-enabled UE and the ProSe Function over PC3 reference point. In the ProSe UE-to-Network Relay case the Remote UE will send this control information over PC5 user plane to be relayed over the LTE-Uu interface towards the ProSe Function.
- Configuration of parameters (e.g. including IP addresses, ProSe Layer-2 Group IDs, Group security material, radio resource parameters). These parameters can be pre-configured in the UE, or, if in coverage, provisioned by signalling over the PC3 reference point to the ProSe Function in the network.

The ProSe Application Server supports the Storage of EPC ProSe User IDs, and ProSe Function IDs, and the mapping of Application Layer User IDs and EPC ProSe User IDs. The ProSe Application Server (AS) is an entity outside the scope of 3GPP. The ProSe application in the UE communicates with the ProSe AS via the application-layer reference point PC1. The ProSe AS is connected to the 3GPP network via the PC2 reference point.

**LCP procedure for D2D, sidelink logical channels**

The LCP procedure for D2D will be different than the above-presented LCP procedure for "normal" LTE data. The following information is taken from TS 36.321, current version 13.0.0, subclause 5.14.1.3.1 describing the LCP procedure for ProSe.

The Logical Channel Prioritization procedure is applied when a new transmission is performed. Each sidelink logical channel has an associated priority which can be the PPPP (ProSe per packet priority, explained later). Multiple sidelink logical channels may have the same associated priority. The mapping between priority and LCID is left for UE implementation.

The MAC entity shall perform the following Logical Channel Prioritization procedure for each SCI transmitted in an SC period:

- The MAC entity shall allocate resources to the sidelink logical channels in the following steps:

  - Step 0: Select a ProSe Destination, not previously selected for this SC period, having the sidelink logical channel with the highest priority, among the sidelink logical channels having data available for transmission;

  - Step 1: Among the sidelink logical channels belonging to the selected ProSe Destination and having data available for transmission, allocate resources to the sidelink logical channel with the highest priority;

  - Step 2: if any resources remain, sidelink logical channels belonging to the selected ProSe Destination are served in decreasing order of priority until either the data for the sidelink logical channel(s) or the SL grant is exhausted, whichever comes first. Sidelink logical channels configured with equal priority should be served equally.

- The UE shall also follow the rules below during the scheduling procedures above:
  The UE shall allocate resources to the sidelink logical channels according to the following rules

  - the UE should not segment an RLC SDU (or partially transmitted SDU) if the whole SDU (or partially transmitted SDU) fits into the remaining resources;

  - if the UE segments an RLC SDU from the sidelink logical channel, it shall maximize the size of the segment to fill the grant as much as possible;

  - the UE should maximise the transmission of data;

  - if the MAC entity is given an sidelink grant size that is equal to or larger than 10 bytes while having data available for transmission, the MAC entity shall not transmit only padding.

NOTE: The rules above imply that the order by which the sidelink logical channels are served is left for UE implementation.

Generally, for one MAC PDU, MAC shall consider only logical channels with the same Source Layer-2 ID - Destination Layer 2 ID pairs, i.e. for one MAC PDU, the MAC entity in the UE shall consider only logical channels of the same ProSe destination group, which basically means that the UE selects a ProSe destination during the LCP procedure. In Rel-13 it is allowed to have more than one Sidelink Grant within a SC period. For each sidelink grant the UE can as in Rel-12 only transmit data of one ProSe destination group. However, since the UE can be configured to have more than one valid sidelink grant within one SC period, a transmitting UE can transmit data to different ProSe destinations, i.e. each SL grant must transmit data to a different ProSe destination.

**QoS Support for ProSe**

In Rel-13 QoS is supported generally for ProSe one-to-many communication. For that reason the so-called ProSe Per-Packet Priority (PPPP) was introduced, e.g. in TS 23.303. ProSe Per-Packet Priority is a scalar value associated with a protocol data unit, e.g. IP packet, that defines the priority handling to be applied for transmission of that protocol data unit, i.e. priority handling for transmissions on the PC5 interface. In other words, ProSe PPP is a mechanism used to allow prioritization of packets when using ProSe Direct Communication including for ProSe UE-to-UE and also for ProSe Relay.

When the ProSe upper layer (i.e. above PC5 access stratum) passes a protocol data unit for transmission to the PC5 access stratum, the ProSe upper layer provides a ProSe Per-Packet Priority from a range of 8 possible values.

The ProSe Per-Packet Priority is independent of the Destination Layer-2 ID and applies to both one-to-one and one-to-many ProSe Direct Communication. The ProSe Per-Packet Priority is selected by the application layer, e.g. based on various criteria that are outside the scope of this specification (such as delay requirements of the service like Voice packet transmissions or control signaling like floor control related signaling).

The ProSe Per-Packet Priority is independent of the mode in which the UE accesses the medium i.e. whether scheduled or autonomous resource allocation mode for ProSe communication is used. The ProSe access stratum uses the ProSe Per-Packet Priority associated with the protocol data unit as received from the upper layers to prioritize the transmission in respect with other intra-UE transmissions (i.e. protocol data units associated with different priorities awaiting transmission inside the same UE) and inter-UE transmissions (i.e. protocol data units associated with different priorities awaiting transmission inside different UEs).

Priority queues (both intra-UE and inter-UE) are expected to be served in strict priority order i.e. UE or eNB serves all packets associated with ProSe Per-Packet Priority N before serving packets associated with priority N+1 (lower number meaning higher priority).

The priority handling on the PC5 interface itself will be specified in TS36.321, i.e. logical channel prioritization LCP procedure. For each sidelink logical channel there will be an associated priority, e.g. similar to logical channel priority in legacy LTE UL operation. The creation of sidelink logical channels will be left to UE implementation, similar to Rel-12. In addition to taking source/destination ID of packets into account when creating a logical channel, the UE will also take into account the priority of packets. Essentially protocol data units having the same PPPP value (and same source/destination ID) will be served by one sidelink logical channel with a certain associated logical channel priority, which is the same as PPPP.

As explained above, during logical channel prioritization procedure when the UE receives a SL grant, the UE selects the ProSe group having the sidelink logical channel with the highest PPPP among the sidelink logical channels having SL data, and then serves all sidelink logical channels belonging to the selected ProSe destination group in a decreasing priority order.

**Sidelink data transfer and LCP procedure**

Above, detailed information was already provided how sidelink data can be transmitted. The sidelink LCP procedure and further steps related to the SL data transfer come together to allow the transmission of sidelink data and related control information, i.e. SCI. For instance, it is assumed that at the latest at step 1 of the sidelink LCP procedure the amount of resources to be allocated is known. In turn, the amount of resources, which in Mode 2 is autonomously selected by the ProSe UE, directly depends on the ProSe destination group which is selected in Step 0 of the sidelink LCP procedure. Consequently, between step 0 and step 1 of the sidelink LCP procedure, the ProSe UE needs to perform the selection of the sidelink grant, according to Mode 2, i.e. select the actual time/frequency resources to be used for performing the transmission. Further, the UE must determine the exact amount of data it intends to transmit within the next SC period using the selected sidelink grant. Then, the sidelink LCP procedure is used to allocate the determined amount of resources, e.g. transport block size, to the sidelink logical channels having data available for transmission to the selected ProSe destination. The actual transmission of the data (i.e. the transport block) is performed in a usual manner, by first determining the necessary transmission parameters (e.g. MCS; TB size, T-RPT and SA pattern, etc.) and then performing the transmission based on these parameters.

The coordination between and the timing of the various steps is not standardized in detail but left mostly for implementation. However, this procedure for transmitting sidelink data can be further improved.

TS 36.300 in version 13.2.0 titled "3rd Generation Partnership Project; Technical Specification Group Radio Access Network; Evolved Universal Terrestrial Radio Access (E-UTRA) and Evolved Universal Terrestrial Radio Access Network (E-UTRAN); Overall Description; Stage 2 (Release 13)" provides an overview and overall description of the E-UTRAN radio interface protocol architecture. Among many other things, TS 36.300 provides some explanation for support of sidelink communication, with regard to the radio protocol architecture, the radio resource allocation, resource pool for sidelink control information.

US 2015/0305080 A1 discloses a logic channel handling method for device-to-device communication.

KYOCERA: "Consideration of bearer mapping for ProSe communication", 3GPP Draft; R2-154678 is a document for discussion and decision discussing the RAN aspects of bearer mapping architecture.

INTEL CORPORATION: "Open aspects of priority handling for ProSe communication", 3GPP Draft; R2-154385 is a document for discussion regarding priority handling for Prose communication on stage-3 details of BSR reporting and solutions for addressing prioritization in case of autonomous resource selection.

PANASONIC: "Buffer status reporting/priority handling for ProSe communication", 3GPP Draft; R2-154244 is a document for discussion and decision and discusses the buffer status reporting / prioritization mechanism for eNB controlled resource allocation mode in Rel-13.

**SUMMARY OF THE INVENTION**

The invention is captured in the appended claims and relates to a user terminal, and a method for performing a direct communication transmission over a sidelink connection.

Non-limiting examples provide improved mechanism to be used by a terminal for performing a direct communication transmission over a sidelink connection. Particularly, the sidelink data transmission is improved when using radio resources autonomously selected by the terminal from configured radio resource

According to several aspects described herein, the sidelink data transmission shall be improved. In order to discuss these aspects, the following exemplary assumptions are made. In particular, it is assumed that the user equipment is capable to perform direct communications with other user equipment(s), via respective sidelink connection(s). A plurality of sidelink logical channels can be configured in the user terminal depending on the possible destination of the sidelink data as well as based on the priority associated with the sidelink data (e.g. QoS). A logical channel is for instance set up to carry sidelink data of a particular priority to a particular sidelink destination (also termed ProSe destination, or ProSe destination group). Therefore, each sidelink logical channel is assigned one specific priority, based for instance on the priority of the data that is to be transmitted by said sidelink logical channel. Put differently, sidelink data having a similar/same priority and having the same sidelink destination is served by the same sidelink logical channel.

It is further assumed that the transmitting user equipment is configured with at least one radio resource pool indicating particular radio resources that are usable by the transmitting user equipment to perform a transmission of sidelink data. Also, each radio resource pool is associated with at least one priority; for instance, a priority list is associated with each radio resource pool listing all priorities for which this particular radio resource pool shall be applicable. For example, since the user equipment is configured with several radio resource pools having different priorities, load balancing can be performed based on priorities. A high-priority resource pool would be intended for high-priority sidelink data, in contrast to a low-priority resource pool. Thus, it is possible to transmit high-priority data via high-priority resources that should be less congested than low-priority resources.

It is assumed that the sidelink data transfer is performed in the autonomous resource allocation mode according to which the UE, when a new transmission is to be performed, autonomously selects radio resources from a suitable radio resource pool to transmit the sidelink data.

Correspondingly, according to the sidelink data transfer of the first aspect, the user terminal selects a sidelink destination, among the various sidelink destinations of the pending sidelink data. For instance, the user equipment selects that sidelink destination associated with the highest priority, i.e. that sidelink destination being associated with the sidelink logical channel having the highest priority among all those sidelink logical channels having sidelink data available for transmission. This selection of the sidelink destination can be e.g. part of the logical channel prioritization procedure performed by the UE when a new transmission is to be performed so as to allocate (previously selected) radio resources for the new transmission.

Furthermore, a radio resource pool is to be selected. For the simplest case, the UE is configured with only one radio resource pool such that the only one is selected. On the other hand, the UE can be configured with a plurality of radio resource pools, such that one among them has to be selected. In the latter case, the selection of the resource pool can be performed based on the priority of the radio resource pool and the priority of the data that is to be transmitted, by selecting that radio resource pool that is associated with the highest priority among the priorities of the sidelink logical channels that are associated with the selected sidelink destination. Put differently, the highest priority among the priorities of the sidelink logical channels associated with the selected sidelink destination is determined, and the priority list associated with each radio resource pool is compared against the determined highest priority such that the radio resource pool is selected, which priority list comprises the mentioned highest priority.

According to the first aspect, the inventors have realized that it is possible to improve the procedure of the sidelink data transfer by properly matching the priorities of the sidelink logical channels associated with the selected sidelink destination with the priorities associated with the selected radio resource pool. Put differently, once that the sidelink destination and the radio resource pool are selected, the improved sidelink data transfer according to the first aspect not only restricts the sidelink data transfer to those sidelink logical channels that are associated with the selected sidelink destination but also restricts the sidelink data transfer to only those sidelink logical channels that have a priority that is among the priorities associated with the selected radio resource pool. Correspondingly, the UE will determine the amount of sidelink data to be transmitted by only taking into consideration data that is available for transmission from sidelink logical channels that are associated with the selected sidelink destination and that have a priority that is among the priorities associated with the selected radio resource pool. Therefore, the first aspect requires an additional comparison to be made by the UE so as to match the priorities of the sidelink logical channels of the selected sidelink destination with the priorities of the selected radio resource pool.

After having thus determined the (amount of) data that is to be transmitted, the process can continue so as to actually perform the transmission of the determined (amount of) data. This comprises in a usual manner the determination of various transmission parameters that are necessary for the UE to perform the physical transmission of the data via the sidelink interface.

The UE then performs the transmission of the sidelink data based on these determined transmission parameters.

Some of the transmit parameters that are to be determined by the UE depend on the amount of sidelink data determined in the previous step(s) and for the usual sidelink transmission include the following non-exhaustive and non-limiting examples. A suitable amount of time and frequency radio resources shall be selected from the selected radio resource pool so as to be able to transmit the determined sidelink data with this sidelink grant. Also a corresponding modulation and coding scheme and transport block size may be determined. Specific for the sidelink data transmission is a selection of suitable transmission patterns for the transmission of the sidelink data and corresponding sidelink control information.

The usual sidelink data transfer is accompanied by the transmission of corresponding sidelink control information transmitted at the beginning of the sidelink transmission control period such that the receiving entity is capable of receiving and correctly decoding the subsequent transmittal of the sidelink user data. The sidelink control information comprises part or all of the above-mentioned transmission parameters, such as the transmission patterns, the modulation and coding scheme, and information on the radio resources, and also identifies the sidelink destination of the sidelink data.

A variant of the first aspect deals with the allocation of the radio resources between the sidelink logical channels. For the sidelink data transfer, the UE may perform a sidelink logical channel prioritization procedure so as to allocate the radio resources, previously selected by the user terminal from the selected radio resource pool, to generate a transport block with data from those sidelink logical channels that are associated with the selected sidelink destination. The usual sidelink logical channel prioritization procedure could be applied according to which the radio resources are allocated first to the sidelink logical channel with the highest priority (among those sidelink logical channels being associated with the selected sidelink destination), and then, if resources remain, to the remaining sidelink logical channels belonging to the selected sidelink destination in a decreasing order of priority. Since the radio resources to be allocated by the LCP procedure had been selected based on the determined amount of data (which in turn was determined disregarding the sidelink logical channels that are unsuitable for the selected radio resource pool), the selected amount of radio resources will only be sufficient for the LCP procedure to serve the "correct" sidelink logical channels, i.e. those sidelink logical channels which priority corresponds to the priorities associated with the selected radio resource pool.

In an alternative variant, the LCP procedure can also be adapted to the first aspect as will be explained now. In order to be in line with the above discussed priority-based restriction of the sidelink logical channels when determining the amount of data to transmit, the LCP procedure performed by the UE for the sidelink data transfer may additionally be adapted so as to also only consider those sidelink logical channels that have a priority that is among the at least one priority associated with the selected radio resource pool. Consequently, the improved LCP procedure allocates radio resources to only a restricted set of sidelink logical channels, namely to those sidelink logical channels that are associated with the selected sidelink destination and that have a priority that is among the at least one priority associated with the selected radio resource pool (from which the radio resources are selected).

According to a further variant of the first aspect, the additional restriction of only considering sidelink logical channels that match the priority of the radio resource pool is not applied at all times in order to avoid that lower-priority data, destined to the selected sidelink destination, is stalled. In particular, by restricting the sidelink data transfer to only those sidelink logical channels associated with the selected sidelink destination that also match the priority of the radio resource pool, sidelink data served by sidelink logical channels that do not match the priority of the radio resource pool are not transmitted in the next sidelink control period. This reduces the overall amount of data that is transmitted within one sidelink control period (to a particular sidelink destination), and entails the risk of repeatedly disregarding the data of lower-priority sidelink logical channels (lower priority in view of that the radio resource pool is usually selected based on the highest-priority sidelink logical channel that is associated with the selected sidelink destination).

In order to mitigate these drawbacks, a variant of the first aspect implements a further mechanism that ensures that these lower-priority sidelink logical channels are also considered by the UE from time to time. In other words, a mechanism is additionally foreseen so as to control when the disregarding of these lower-priority sidelink logical channels is applied and when it is not applied. According to one option, additional timers are defined for the sidelink logical channels such that a sidelink logical channel for which the timer has expired is again considered when determining the amount of data to transmit for a selected sidelink destination, even when its associated priority is not among the priorities of the selected radio resource pool.

One possible mechanism is based on timers. A timer may be for instance started at the first time a sidelink logical channel is disregarded for the sidelink data transfer because its priority does not match the priority list of the radio resource pool selected by the UE for the sidelink data transmission. Another option would be to start the timer when data becomes available for a sidelink logical channel for the first time, irrespective of the time it is disregarded for the sidelink data transfer. The value of the timers in each of the two options depends e.g. on the kind of data served by the sidelink logical channel and is to be set accordingly to ensure that sidelink data is not stalled for too long.

Instead of using timers, another possibility would be to monitor the ratio between high-priority sidelink data and low-priority sidelink data transmitted for a particular sidelink destination, and to ensure that said ratio stays within certain limits. For instance, a ratio of 75% high-priority sidelink data and 25% low-priority sidelink data (i.e. three times more high-priority data than low-priority data) shall be achieved, and when determining the amount of data to transmit, certain low-priority sidelink logical channels are disregarded or not depending on said ratio.

This additional variant using timers or ratios to avoid stalling lower-priority data can be applied in a corresponding manner to the LCP procedure described above such that the UE applies the same mechanism to both the LCP procedure and the procedure of determining the amount of data to transmit from among several sidelink logical channels to a selected sidelink destination.

A second aspect provides a different sidelink data transfer mechanism as will be explained in the following. Similar assumptions can be made as for the first aspect. For instance, it is assumed that a plurality of sidelink logical channels is configured in the user terminal, each sidelink logical channel being assigned a particular priority and being associated with a particular sidelink destination. Furthermore, it is assumed that the user equipment is configured with at least one radio resource pool indicating particular radio resources that are usable by the UE to perform a sidelink data transmission. Each radio resource pool in turn is associated with one or more priorities (e.g. listed in a priority list). Correspondingly, when performing a sidelink data transfer, the UE shall autonomously select radio resources from a suitable radio resource pool.

Then, in the usual manner and basically the same as for the first aspect, the sidelink data transfer according to the second aspect also involves the selection of a particular sidelink destination, among the various sidelink destinations to which data is available for transmission. For instance, the user equipment selects that sidelink destination of the highest priority, i.e. that sidelink destination being associated with the sidelink logical channel having the highest priority among all those sidelink logical channels with sidelink data available for transmission.

In a further step, the user terminal selects a radio resource pool, assuming for the purpose of explanation that the UE is configured with multiple radio resource pools. The selection of the radio resource pool is performed in a particular manner according to the second aspect. In more detail, the resource pool selection is performed based on the priority(ies) of the radio resource pool and the priority(ies) of the sidelink logical channels carrying data for the selected sidelink destination, namely by selecting that radio resource pool having a priority (e.g. in its priority list) which is the same or lower than the lowest priority among the priorities of the sidelink logical channels that are associated with the selected sidelink destination. Put differently, the radio resource pool selection shall avoid selecting a radio resource pool having a higher priority than justified by the lowest priority of the sidelink logical channels which data is to be transmitted to the selected sidelink destination. Consequently, this is in contrast to the current standardization and also to the above described variant of the first aspect where the highest priority of the sidelink logical channels is taken as the reference for selecting the radio resource pool. Instead, the second aspect suggests that the lowest priority of those sidelink logical channels is determined and compared to the various resource pools in order to find that one that matches with the determined lowest priority.

One effect is that the UE selects a lower-priority resource pool than would normally be justified in view of having also high-priority data pending for transmission to the selected sidelink destination.

Furthermore, the UE shall determine the amount of sidelink data to transmit to the selected sidelink destination, by considering all sidelink logical channels that are associated with the selected sidelink destination.

Consequently, in contrast to the first aspect, the data determination according to the second aspect does not disregard sidelink logical channels which priority is not among the priorities of the radio resource pool. Consequently, the amount of data to be transmitted is not reduced as done according to the first aspect, however high-priority data is then transmitted via lower-priority radio resources. A further important advantage is that high-priority radio resource pools are exclusively used for high-priority data and thus are not congested with the transmission of low-priority data, since as soon as low-priority data is available for transmission to the selected sidelink destination, a lower-priority radio resource pool is selected according to the selection process described above.

After having determined thus the amount of sidelink data to be transmitted, the UE can proceed to prepare and perform the actual transmission of the sidelink data. As discussed before with regard to the first aspect and in a usual manner, the UE may thus have to determine the various transmission parameters that are necessary for the UE to perform the actual physical transmission of the data via the air interface. Using these determined transmission parameters, the UE then performs the transmission of the sidelink data to the determined sidelink destination.

Correspondingly, in one general first aspect, the techniques disclosed here feature a transmitting user terminal for performing a direct communication transmission over a sidelink connection to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The transmitting user terminal comprises a processor and a transmitter as follows. The processor selects a sidelink destination and selects one of the at least one radio resource pool. Furthermore, the processor determines the amount of sidelink data to transmit, among the sidelink data being available for transmission from those sidelink logical channels that are associated with the selected sidelink destination and that have a priority that is among the at least one priority associated with the selected radio resource pool. The processor also determines transmission parameters for performing the transmission of the determined amount of sidelink data. The transmitter transmits the determined amount of sidelink data based on the determined transmission parameters.

Correspondingly, in one general second aspect, the techniques disclosed here feature a transmitting user terminal for performing a direct communication transmission over a sidelink connection to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The transmitting user terminal comprises a processor and a transmitter as follows. The processor selects a sidelink destination. The processor further selects one of the at least one radio resource pool, the selected one being associated with a priority which is the same or lower than the lowest priority among the priorities of the sidelink logical channels associated with the selected sidelink destination. The processor determines the amount of sidelink data to transmit, among the sidelink data being available for transmission from those sidelink logical channels that are associated with the selected sidelink destination, The processor also determines transmission parameters for performing the transmission of the determined amount of sidelink data. The transmitter transmits the determined amount of sidelink data based on the determined transmission parameters.

Correspondingly, in one general first aspect, the techniques disclosed here feature a method for performing a direct communication transmission over a sidelink connection from a transmitting user terminal to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The method comprises the steps of selecting a sidelink destination and selecting one of the at least one radio resource pool. Further, the amount of sidelink data to transmit is determined, among the sidelink data being available for transmission from those sidelink logical channels that are associated with the selected sidelink destination and that have a priority that is among the at least one priority associated with the selected radio resource pool. Further, transmission parameters are determined for performing the transmission of the determined amount of sidelink data, And, the determined amount of sidelink data is then transmitted based on the determined transmission parameters.

Correspondingly, in one general second aspect, the techniques disclosed here feature a method for performing a direct communication transmission over a sidelink connection from a transmitting user terminal to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The method comprises the step of selecting a sidelink destination. Further, one of the at least one radio resource pool is selected, the selected one being associated with a priority which is the same or lower than the lowest priority among the priorities of the sidelink logical channels associated with the selected sidelink destination. The amount of sidelink data to transmit is determined, among the sidelink data being available for transmission from those sidelink logical channels that are associated with the selected sidelink destination. The transmission parameters are determined for performing the transmission of the determined amount of sidelink data. Then, the determined amount of sidelink data is transmitted based on the determined transmission parameters.Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

These general and specific aspects may be implemented using a system, a method, and a computer program, and any combination of systems, methods, and computer programs.

## BRIEF DESCRIPTION OF THE FIGURES

In the following exemplary embodiments are described in more detail with reference to the attached figures and drawings.

Fig. 1     shows an exemplary architecture of a 3GPP LTE system,

Fig. 2     shows an exemplary downlink resource grid of a downlink slot of a subframe as defined for 3GPP LTE (Release 8/9),

Fig. 3     schematically illustrates how to establish a layer-2 link over the PC5 for ProSe communication,

Fig. 4     illustrates the use of transmission/reception resources for overlay (LTE) and underlay (D2D) systems,

Fig. 5     illustrates the transmission of the Scheduling Assignment and the D2D data for two UEs,

Fig. 6      illustrates the D2D communication timing for the UE-autonomous scheduling Mode 2,

Fig. 7      illustrates the D2D communication timing for the eNB-scheduled scheduling Mode 1,

Fig. 8      illustrates an exemplary architecture model for ProSe for a non-roaming scenario,

Fig. 9      illustrates an exemplary ProSe scenario for transmitting sidelink data from three sidelink logical channels to a sidelink destination in one SC period using one of two available resource pools according to the prior art,

Fig. 10     illustrates a brief sequence diagram for the ProSe UE operation according to the first embodiment,

Fig. 11     illustrates an exemplary sidelink data transfer for one SC period according to the first embodiment,

Fig. 12     illustrates a brief sequence diagram for the ProSe UE operation according to the second embodiment, and

Fig. 13     illustrates an exemplary sidelink data transfer for one SC period according to the second embodiment.

## DETAILED DESCRIPTION

A **mobile station** or **mobile node** or **user terminal** or **user equipment** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"radio resources"** as used in the set of claims and in the application is to be broadly understood as referring to physical radio resources, such as time-frequency resources.

The term **"direct communication transmission"** as used in the set of claims and in the application is to be broadly understood as a transmission directly between two user equipments, i.e. not via the radio base station (e.g. eNB). Correspondingly, the direct communication transmission is performed over a **"direct sidelink connection",** which is the term used for a connection established directly between two user equipments. For example, in 3GPP the terminology of D2D (Device-to-Device) communication is used or ProSe communication, or a sidelink communication. The term **"direct sidelink connection"** as used in the set of claims and in the application is to be broadly understood and can be understood in the 3GPP context as the PC5 interface described in the background section.

The term **"ProSe"** or in its unabbreviated form, **"Proximity Services",** used in the application is applied in the context of Proximity-based applications and services in the LTE system as exemplarily explained in the background section. Other terminology such as **"D2D"** is also used in this context to refer to the Device-to-Device communication for the Proximity Services. Furthermore, in the claims the terminology of **"sidelink logical channels"** is used so as to be consistent with the overall terminology employed throughout the set of claims, such as **"sidelink data",** or **"sidelink destination"; "sidelink logical channels"** are those logical channels set up for proximity services/ D2D.

The term **"sidelink destination group"** and **"sidelink destination"** used in the set of claims and in the remaining application can be understood as e.g. one Source Layer-2 ID - Destination Layer 2 ID pair defined in 3GPP LTE.

The expression of a **"radio resource pool being usable",** (and similar expressions) as used in the set of claims and in the application shall be understood in a broad manner such that resources must not but can be selected from the radio resource pool and be used by the terminal, in case the terminal would like to perform a direct communication transmission (e.g. of a scheduling assignment or direct communication data). Correspondingly, the expression of a radio resource pool being used (and similar expressions), shall be understood in a broad manner such that the terminal indeed intends to perform a direct communication transmission and selects appropriate resources from the transmission radio resource pool and performs said direct communication transmission on said selected resources.

In connection with a data transfer for Proximity Services, ProSe, the UE is allowed to autonomously select radio resources from corresponding pools with which the UE has been configured e.g. by upper layer(s) (Mode-2 autonomous resource allocation),e.g. radio resource pool configuration is broadcasted by system information. The mechanism currently foreseen in the standard as explained in the background section defines that, after determining the sidelink destination (ProSe destination group), a suitable radio resource pool is selected whose priority list includes the priority of the highest priority of the sidelink logical channel in the MAC PDU to be transmitted (the MAC PDU relating to data of the selected sidelink destination). Just to mention that the radio resource pool can be also selected before selecting the sidelink destination since the resource pool selection is done based on the priority of the highest priority sidelink logical channel having data available for transmission. The order of radio resource pool selection and sidelink destination is more or less subject to an implementation.

Consequently, any further MAC PDUs transmitted for the selected sidelink destination and using the same sidelink grant have to be transmitted using radio resources from the same radio resource pool, regardless of the priorities of the further MAC PDUs and its associated sidelink logical channels. As a result, there could be a problem that lower-priority MAC PDUs are transmitted with radio resources of high-priority radio resource pools, thus possibly creating congestion for other high-priority MAC PDUs from other UEs using the same high-priority radio resource pool.

This problem is exacerbated in scenarios where there is only little high-priority data and a lot of lower-priority data for a particular sidelink destination. In this case, a high-priority radio resource pool will be selected to transmit the sidelink data but the high-priority radio resources will be used mainly for transmitting lower-priority sidelink data.

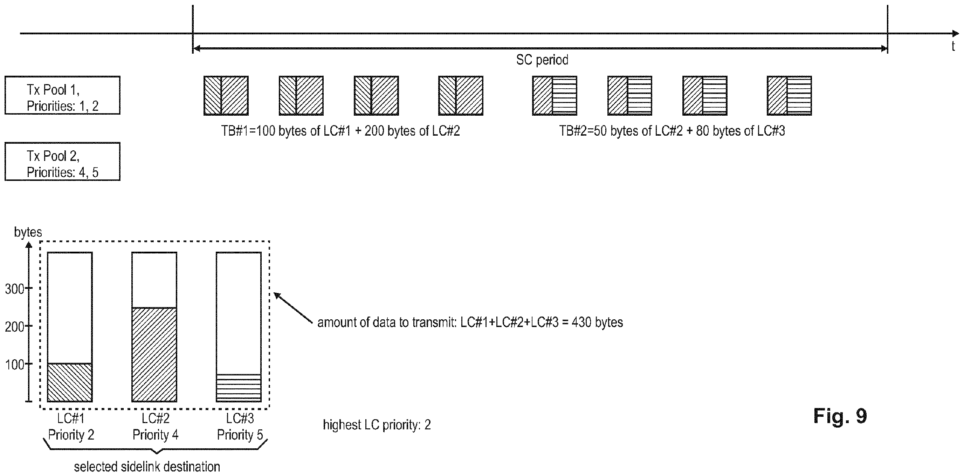

This will described in connection with Fig. 9, illustrating an exemplary scenario with three sidelink logical channels having different priorities, respectively 2, 4, and 5, but having sidelink data in its transmission buffers destined to the same (selected) sidelink destination. Of course, this assumption is only made for illustration purposes in Fig. 9, since the UE might be set up with more or less sidelink logical channels, also having other priorities. Furthermore, it is assumed for the scenario that two resource pools are configured for the cell the UE is operating sidelink communication in, that indicate radio resource available to transmit sidelink data, such as the one of the three sidelink logical channels. Also the radio resource pools are associated with respective priorities, namely resource pool 1 with priorities 1, 2, thus being a high-priority resource only intended for the high(est)-priority data. The second resource pool is assigned with the priority 4 and 5, thus being intended for mid-level-priority data. It should be noted that for the following it is assumed that the priority value 1 is the highest priority and the priority value 8 is the lowest priority. Of course, even though this is not illustrated in Fig. 9, a cell can be configured with more resource pools, also having further different priorities.

The SL data transfer as currently specified would select the radio resource pool being associated with the highest priority among the priorities of the sidelink logical channels. The highest sidelink logical channel priority is 2, such that radio resource pool 1 is selected, which has the priority 2 in its priority list.

In the exemplary scenario illustrated in Fig. 9 it is assumed that 100 bytes of sidelink data is pending for the first sidelink logical channel 1, 250 bytes for the second sidelink logical channel 2, and 80 bytes for the third sidelink logical channel. Consequently, the UE determines that 430 bytes of sidelink data is pending in total to be transmitted to the sidelink destination group selected previously. It is exemplarily assumed that the UE decides to transmit all of the pending sidelink data in the next SC period and to use a sidelink transmission pattern that allows transmitting two transport blocks within the next SC period. Based thereon, the UE decides to carry 300 bytes with the first transport block (MAC PDU) and 130 bytes with the second transport block (MAC PDU).

The LCP procedure would be performed accordingly by allocating radio resources, previously selected from the selected pool #1, to the sidelink logical channels, in a decreasing order of priority, thereby filling the first transport block with 100 bytes from LC#1 and 200 bytes of LC#2 and filling the second transport block with the remaining 50 bytes of LC#2 and all of the 80 bytes of LC#3.

The transport blocks are transmitted by the UE using the selected transmission pattern (involving a first transmission of the transport block, and three re-transmissions thereof), as illustrated in Fig. 9. In order to provide a simple illustration, the transmission of sidelink control information has been omitted in Fig. 9.

The problem generally explained above may be easily appreciated from the scenario illustrated in Fig. 9. Although a high-priority resource pool is selected (because of the high priority of LC#1), only little part of the total amount of data is actually high-priority data, while the larger part is mid-level-priority data. The high-priority resources are thus congested with the lower-priority data, which may cause collisions with high-priority data transmissions from other UEs in the cell using the same high-priority radio resource pool.

The following exemplary embodiments are conceived by the inventors to mitigate one or more of the problems explained above.

Particular implementations of the various embodiments are to be implemented in the wide specification as given by the 3GPP standards and explained partly in the background section, with the particular key features being added as explained in the following pertaining to the various embodiments. It should be noted that the embodiments may be advantageously used for example in a mobile communication system, such as 3GPP LTE-A (Release 10/11/12/13) communication systems as described in the Technical Background section above, but the embodiments are not limited to its use in this particular exemplary communication networks.

The explanations should not be understood as limiting the scope of the disclosure, but as a mere example of embodiments to better understand the present disclosure. A skilled person should be aware that the general principles of the present disclosure as laid out in the claims can be applied to different scenarios and in ways that are not explicitly described herein. For illustration purposes, several assumptions are made which however shall not restrict the scope of the following embodiments.

Furthermore, as mentioned above, the following embodiments may be implemented in the 3GPP LTE-A (Rel.12/13) environment, but possibly also in future releases. The various embodiments mainly provide an improved sidelink data transfer, and for instance the determination of the sidelink grant as a necessary part of the sidelink data transfer. Therefore, other functionality (i.e. functionality not changed by the various embodiments) may remain exactly the same as explained in the background section or may be changed without any consequences to the various embodiments. This includes other ProSe functionality such as discovery procedures performed by the UE(s) so as to discover other ProSe-capable UE(s) to which to transmit sidelink data, and also includes currently defined mechanisms for generating and transmitting the sidelink control information that precedes the transmission of sidelink data. Also, mechanisms applied by the UE to perform the actual transmission of sidelink data do not need to be changed, such as modulation, coding, transport block size determination, determination of transmission patterns for the sidelink data, etc.

*First embodiment*

In the following a first embodiment for solving the above-mentioned problem(s) will be described in detail. Different implementations and variants of the first embodiment will be explained as well.

An exemplary scenario may be assumed where user equipments are enabled to perform ProSe communication (ProSe-enabled UEs), i.e. D2D transmissions directly between UEs without the detour via the eNodeB via respective sidelink connections. The UE is set up accordingly and has already discovered other UE(s) with which it can exchange sidelink data by use of corresponding ProSe discovery mechanism(s). Sidelink logical channels are configured within the UE for handling the different sidelink data that is to be transmitted to other ProSe UE(s) e.g. of a particular ProSe destination group. In the usual manner, the sidelink logical channels are associated with the ProSe destination to which the respective sidelink data is destined. The sidelink data has also a ProSe per packet priority (PPPP), which is a scalar value associated with the PDUs and which defines the priority handling of that data. Correspondingly, the sidelink logical channels carrying the sidelink data are also associated with a priority that corresponds to the PPPP of the sidelink data. The priority of the sidelink logical channels can have e.g. a value from a range of 8 possible values, where e.g. 1 corresponds to the highest priority, and 8 corresponds to the lowest priority.

The ProSe-enabled UE can operate in two different modes of resource allocation, the eNB-scheduled resource allocation (Mode 1) and the UE-autonomous resource selection (Mode 2). The embodiments relate to the Mode 2 resource allocation, where the UE selects suitable resources (time and frequency) on its own from resource pool(s) so as to transmit sidelink data and corresponding sidelink control information. It is assumed that the UE was configured with at least one radio resource pool, which may be done in the usual manner by the eNodeB to which the UE is connected, e.g. by the eNB providing corresponding information via a system broadcast in its cell. For example, one resource pool is defined by the content of SIB18, namely by the field commTxPoolNormalCommon, which is broadcasted in the cell of the eNodeB. The UE in the cell receives the broadcast and correspondingly is configured with the resource pool, which radio resources are then available for being used by the UE for the sidelink data transfer. The eNodeB may configure multiple of those transmission radio resource pools, define e.g. up to four pools, i.e. respectively four resource pools for the transmission of SCI messages and sidelink data. Also, each of the radio resource pools is associated with one or more priorities, for instance listed in a corresponding priority list associated with the resource pool. Different radio resource pools can be provided for different priorities, which can then be used by the UEs in the cell of the eNodeB depending on the priority of the data that is to be transmitted. The eNodeB can thus distinguish between radio resources usable for transmitting data of different priorities. For instance, a high-priority radio resource pool would be intended to be mainly used for transmitting high-priority data. The priority assigned to the radio resource pool is comparable to the sidelink logical channel priority, and for instance can take 8 different values, where e.g. the value 1 corresponds to the highest priority, and the value 8 corresponds to the lowest priority.

It is assumed that data becomes available for transmission across the various sidelink logical channels and across one or more sidelink destination groups. The UE correspondingly wants to transmit some or all of the sidelink data available for transmission. As explained in the background section, the transmission procedure for ProSe communication is divided into scheduling control, SC, periods, in each of which the UE can transmit sidelink data to various sidelink destination groups using various sidelink grants, but to only one sidelink destination per sidelink grant. On the other hand, multiple MAC PDUs, i.e. transport blocks, can be transmitted by the UE per sidelink grant, i.e. the multiple MAC PDUs carrying data destined to the same sidelink destination.

Furthermore, according to the currently specified ProSe communication procedure, the sidelink data is transmitted in the SC period according to a suitable transmission pattern (T-RPT bitmap, time resource pattern of transmission) which basically defines the timing of the first MAC PDU transmission and its three retransmissions (see also Fig. 6 and corresponding description in background section). The T-RPT pattern is selected by the UE as part of the autonomous radio resource selection (in Mode 1, eNB-scheduled resource allocation, the UE would receive a T-RPT indication in the sidelink grant from the eNodeB).

The first embodiment provides an improved sidelink data transfer procedure performed by the UE, which is based on the above-described exemplary assumptions. The UE has to coordinate various steps to determine which sidelink data is to be transmitted and how the transmission is to be performed exactly. Not all of the these steps will be explained in detail in the following, since the first embodiment will focus only on some of them, such that others may remain the same as usual (i.e. can be performed as for instance described in the background section for a corresponding specific LTE embodiment) or could be changed.

The main step performed according to the first embodiment refers to how the UE determines which data is to be transmitted to a particular, selected, ProSe destination.

The UE selects a sidelink destination, among the sidelink destinations for which sidelink data is available for transmission. For instance, if there is data pending for transmission only towards one sidelink destination, the UE then simply selects this one sidelink destination. Assuming that data is pending for several sidelink destinations, the UE shall select one of them, e.g. depending on the priority of the pending sidelink data, by selecting that sidelink destination that is associated with the sidelink logical channel having the highest priority among all those sidelink logical channels for which data is available.

In a specific variant of the first embodiment, for an implementation in the LTE(-A) environment explained in the background section, the step of selecting the sidelink destination can be part of the sidelink LCP procedure that is applied every time a new transmission is to be performed, particularly as step 0 thereof. In said connection, a further optional restriction to the selection of the sidelink destination, is that for a particular SC period for a given sidelink grant, the same sidelink destination cannot be selected twice, such that a sidelink destination shall be selected for a sidelink grant that was not previously selected for this SC period.

After having selected a particular sidelink destination as explained above, the UE can continue with the SA/SCI data transfer by determining the sidelink grant, which involves the selection of a radio resource pool from which radio resources are then selected. As assumed before, the UE may be configured with one or more appropriate radio resource pools from which to select. In case the UE is only configured with a single radio resource pool, the UE selects this radio resource pool. On the other hand, should the UE be configured with several radio resource pools for transmission, one of them shall be selected by the UE, e.g. depending on the pool priority(ies) and the sidelink data priorities. In particular, the highest priority of the sidelink logical channels having data available for transmission to the selected sidelink destination is taken as the reference, and a suitable radio resource pool is selected in said respect, i.e. that resource pool is selected which has the determined highest priority in its priority list. In case several resource pools have the determined highest priority in their priority list, the UE selects one of them. As explained before with respect to the underlying assumptions, the resource pool priority and the sidelink logical channel priority are basically of the same type and are thus comparable.

In order to overcome the problems as identified and explained in connection with Fig. 9 and to further improve the sidelink data transfer, the step of determining the amount of data to transmit among the sidelink data that is available for transmission to the selected sidelink destination, is further based on the selected radio resource pool. This is a difference to the currently specified procedure according to which the UE determines the amount of data to transmit irrespective of the radio resource pool that was or will be selected. The improved sidelink data transfer according to the first embodiment determines the amount of data to transmit among the data pending for transmission to the selected sidelink destination, but also only among the data which priority matches the priority or priorities of the selected radio resource pool. Put differently, data with a priority that does not match one of the priorities listed in the priority list of the selected radio resource pool, is not transmitted with the sidelink grant even though it is destined to the selected sidelink destination group. Thus, the UE performs a comparison between the radio resource pool priority(ies) and each of the priorities of the sidelink logical channels that are associated with the selected sidelink destination. Based on this comparison, only that data is considered which priority is among the priorities of the selected radio resource pool, i.e. only data from those sidelink logical channels that are associated with the selected sidelink destination and that are associated with a priority which is among the one or more priorities of the selected radio resource pool. Therefore, the amount of data determined by the UE will not include any data from sidelink logical channels which priority is not matching the priority for which the selected radio resource pool is intended. It should be noted that the UE may also decide to transmit less data than is pending in the sidelink logical channels to the selected sidelink destination and matching the pool priority.

One result of the above procedure is that the sidelink data which is then indeed transmitted with resources of the radio resource pool is of a priority that corresponds to the priority of the radio resource pool. For instance, a high-priority radio resource pool will not be used to transmit mid-level or low-priority data, thereby reserving the high-priority resources for only high-priority data. The high-priority radio resources are thus not unduly congested, and high-priority data can be transmitted by UEs with high reliability and causing less interference in the cell.

On the other hand, less data is transmitted to a selected sidelink destination in view of that data which fails to match the pool priority is disregarded for at least this SC period.

After having thus determined the amount of data that the UE wants to transmit in the next SC period, the UE shall continue with preparing and performing the actual transmission of said sidelink data. This may be performed in the usual manner and must not be changed according to the first embodiment.

For instance, the actual transmission of the sidelink data involves determining various transmission parameters that are necessary to perform the transmission. Some of these parameters are directly dependent on the amount of data that was previously determined.

The amount of radio resources selected from the resource pool depends on how much data the UE wants to transmit. This is also true for the determination of the transmission pattern for the sidelink data within the SC period, as well as the determination of the corresponding modulation and coding scheme and thus also of the transport block size, all of them being interrelated and being dependent on the actual amount of data that the UE wants to transmit. The data transmission pattern (T-RPT) defines the timing of the various transmissions and thus influences how many transport blocks can be transmitted within the SC period; for instance, a transmitting pattern where the separate transmissions are timed closely one after another, allows to transmit more data within the SC period.

On the other hand, the modulation scheme and the coding rate to be used for transmission determine how many information bits can be transmitted over the physical resource bocks determined/selected. The modulation and coding scheme (MCS) together with the number of physical resource blocks determines basically the transport block size which is equivalent to the size of the MAC PDU forwarded to the physical layer of the UE. Essentially based on the determined amount of data ready for transmission within the next SC period, the UE will determine considering all necessary transmission parameters such as e.g. the selected T-RPT pattern and MCS the TB sizes of the different MAC PDUs transmitted during the next SC period.

The thus determined transmission parameters may then be used to perform the actual transmission by the UE over the sidelink interface. This may be done by the physical layer of the UE.

The above discussed procedure according to the first embodiment provides an improved sidelink data transfer by matching the priorities of the resource pool and the sidelink logical channels, thereby disregarding sidelink logical channels with priorities not among the resource pool priorities for the SA data transfer.

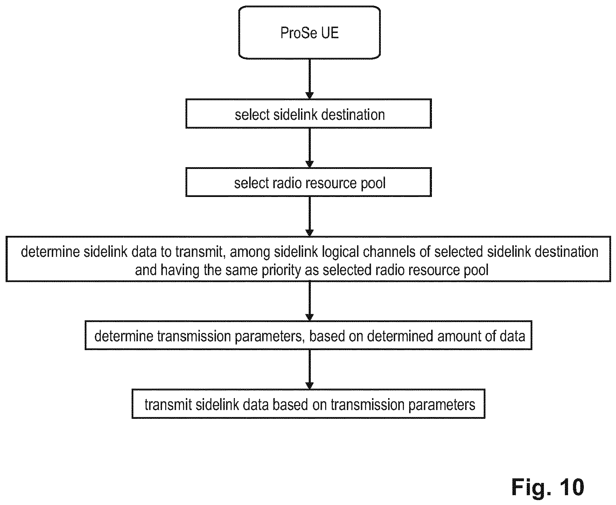

Fig. 10 is an exemplary and simplified sequence diagram for the UE operation according to the first embodiment, illustrating the relevant steps to be performed by the UE as outlined above. The illustrated UE operation of Fig. 10 is greatly simplified so as to focus on the most relevant steps performed by the UE in connection with the improved sidelink data transfer according to the first embodiment. Possible variants of the first embodiment are not illustrated in Fig. 10.

As explained above, the UE autonomously selects the radio resource pool and particular radio resources there from in order to transmit the sidelink data. In the currently defined 3GPP standard TS 36.321 a sidelink logical channel prioritization procedure is defined to allocate these radio resources to sidelink logical channels so as to generate a new sidelink transmission, i.e. to create a MAC PDU with respective data from the sidelink logical channels. This sidelink LCP procedure can be reused for a particular variant of the first embodiment. As explained in the background section, the currently defined sidelink LCP procedure first allocates the radio resources to the sidelink logical channel with the highest priority, and then, if radio resources remain to be allocated, the remaining sidelink logical channels to that same sidelink destination are served in a decreasing order of priority. By having determined the radio resources to allocate and the size of the transport block to be filled by the sidelink LCP procedure based on the determined amount of data, the standard sidelink LCP procedure will properly consider the sidelink logical channels in a decreasing order of priority such that the transport block will be filled with the correct amount of data.

Alternatively, instead of completely reusing the sidelink logical channel prioritization procedure of the currently defined standard, a further variant of the first embodiment foresees to use a sidelink LCP procedure which is adapted according to the gist of the first embodiment. In particular, the improved sidelink LCP procedure could also disregard those sidelink logical channels associated with the selected sidelink destination, which do not match the priority or priorities of the selected radio resource pool. This is in concordance with the previous step of determining the amount of data to transmit, which also only considers those sidelink logical channels with the same priority as supported by the selected radio resource pool and having data to the selected sidelink destination. This variant of the first embodiment thus ensures that the sidelink LCP procedure is only performed on the correct set of sidelink logical channels, namely those that had already been considered for determining the amount of data to be transmitted to the selected sidelink destination.

Although not mentioned so far, for a sidelink data communication as currently defined in the 3GPP standards it is also necessary to transmit sidelink control information at the beginning of the SC period in order for the receiving UE(s) to determine the transmission parameters and to be enabled to receive and correctly decode the subsequent sidelink data within the rest of the SC period. For instance, the sidelink control information carries scheduling information such as the resource block assignment, the time resource pattern, the modulation and coding scheme, as well as an identifier for the sidelink destination. For a particular variant of the first embodiment, the SCI format 0, currently defined in the 3GPP standards can be used in said respect (see background section and TS 36.212, v13.0.0).

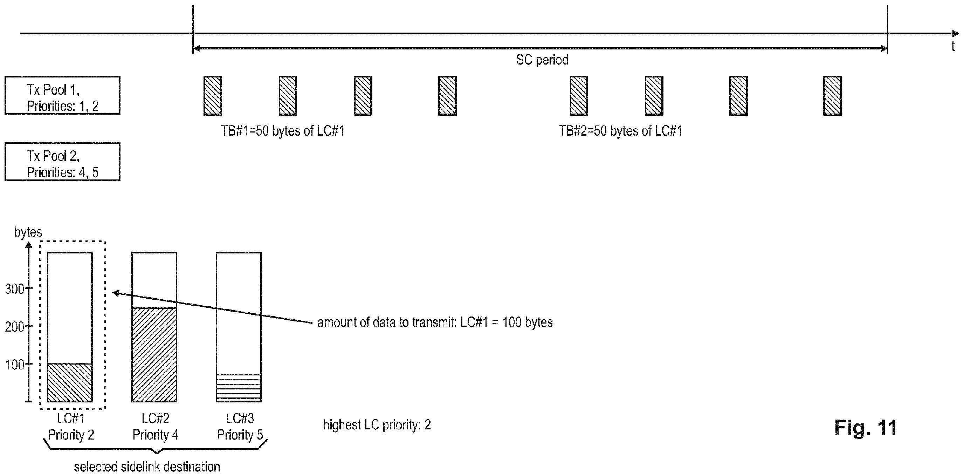

To further facilitate the understanding of how the sidelink data transfer according to the first embodiment works, Fig. 11 illustrates the same scenario as assumed for Fig. 9. As already explained before, the exemplary scenario assumes three sidelink logical channels having different priorities, respectively 2, 4, and 5, but having sidelink data destined to the same (selected) sidelink destination. Correspondingly, the UE will select the single sidelink destination as a destination of the data to be transmitted in the next SC period. Furthermore, two transmission resource pools are configured in the cell, being associated with respective priorities, namely resource pool 1 with priorities 1, 2, thus being a high-priority resource pool only intended for the high(est)-priority data. The second resource pool is assigned with the priorities 4 and 5, thus being intended for mid-level-priority data. In the same manner as described in connection with Fig. 9, the highest sidelink logical channel priority is 2, such that radio resource pool 1 is selected that has the priority value 2 in its priority list.

As with Fig. 9, it is assumed that data is pending for the sidelink logical channels 1, 2 and 3, 430 bytes in total. However, the determination of the amount of data according to the first embodiment not only takes into account whether a sidelink logical channel is associated with the selected sidelink destination but also whether a sidelink logical channel has a priority that is among the priorities of the selected radio resource pool. Consequently, applied to the exemplary scenario of Fig. 11, the UE decides to only transmit data from the sidelink logical channel 1 which has a priority value 2 matching the priority of the selected first radio resource pool; particularly, the UE decides to only transmit 100 bytes out of the total 430 bytes, these 100 bytes however being of high priority. It is again assumed that a data transmission pattern is selected which allows to transmit two transport blocks in the SC period, thus resulting e.g. in 50 bytes of the first sidelink logical channel for the first transport block, and the remaining 50 bytes of the first sidelink logical channel for the second transport block.

As apparent from the example discussed in connection with Fig. 11, the high-priority radio resources of the first radio resource pool are exclusively used for transmitting high-priority data. The lower-priority data may then be transmitted by using radio resources from other radio resource pools in a subsequent SC period. For instance, assuming that in the subsequent SC period the UE again decides to transmit sidelink data to the one sidelink destination and that only the data in the second and third sidelink logical channels remain, the highest sidelink logical channel priority would be the one of sidelink logical channel 2, i.e. priority 4. Correspondingly, the radio resource pool 2 would be selected. Then, the UE would according to the above described procedure transmit the data of sidelink logical channel 2 and 3

In general, it is assumed that the resource pools configured by the eNodeB in the cell should cover all sidelink data priorities that can occur. In the exemplary scenario of Fig. 9, it was assumed that to resource pools, covering priorities 1, 2, 4, and 5 are sufficient. However, considering that the eNodeB will not be able to know for sure which sidelink data will be exchanged between ProSe-enabled UEs, the eNodeB may effectively have to cover all possible priorities with the radio resource pools configured in its cell.

On the other hand, should the eNodeB failed to configure suitable radio resource pools for one or more priorities, in a variant of the first embodiment the step of determining the amount of data to transmit can be further extended such that the UE, when determining the amount of data to transmit, considers those sidelink logical channels that are associated with the selected sidelink destination and that have a priority which is among the priorities associated with the selected radio resource pool, but also considers those sidelink logical channels (to the selected sidelink destination) that are associated with a priority which is the higher than one of the priorities associated with the selected radio resource pool. Correspondingly, this allows that data, which priority is higher than the corresponding priority intended for the radio resource pool, is also transmitted. However, this still prevents that low-priority data is transmitted by using high-priority radio resources.

One possible drawback of the improved sidelink data transfer according to the first embodiment is the possible starvation of lower-priority data. For example, in the scenario exemplarily assumed in Fig. 11, the lower-priority data of sidelink logical channels 2 and 3 would not be transmitted as long as high-priority data is pending in the first sidelink logical channel. Further variants of the first embodiment thus provide mechanisms to avoid that such lower-priority data is stalled. The step of the first embodiment according to which sidelink logical channels that do not match the priority of the selected radio resource pool shall be ignored for the sidelink data transfer, should not be applied at all times. Rather, in order to allow also lower-priority data to be transmitted, the corresponding sidelink logical channels carrying such lower-priority data shall be considered by the UE from time to time when determining the amount of data to transmit.

One possible mechanism to avoid starvation of lower-priority data is based on the use of timers in connection with data pending for lower-priority sidelink logical channels. For example, a timer may be provided for each sidelink logical channel monitoring the time the data is already pending therein. Correspondingly, the respective timer may be started when data enters the transmission buffer of the sidelink logical channel and shall be set to expire after a suitable amount of time. The timer value may depend on the priority of the data served by the respective sidelink logical channel and on the actual implementation desired by the operator. The value of the timer can be configured e.g. by the eNodeB or the ProSe function. The possible delay introduced by the first embodiment for lower priority data can thus be controlled by the use of such timers. Alternatively, the respective timers may be started the first time that the sidelink logical channel is disregarded because of not matching the priorities of the selected radio resource pool, according to the first embodiment. In this case, the timer value may be set lower than for the first alternative.

In either case, sidelink logical channels for which the respective timer was started and is already expired shall not be disregarded by the UE when determining the amount of data to transmit irrespective of whether or not the priority of the sidelink logical channel is not among the priorities of the selected radio resource pool. It is thereby ensured that also lower-priority data, served by lower priority sidelink logical channels, are transmitted eventually, i.e. depending on the configured timer values.

An alternative mechanism to the timers, is the use of particular ratios between the amount of transmitted higher-priority data and transmitted lower-priority data. For example, the additional step of disregarding sidelink logical channels which priority does not match the priorities of the selected radio resource pool, shall only be performed as long as a previously defined ratio is still fulfilled. For example, a ratio may be defined of 75% high-priority sidelink data and 25% low-priority sidelink data (i.e. three times more high-priority data than low-priority data). Then, the UE shall perform the steps of the first embodiment so as to comply with at least said ratio, thereby also considering sidelink logical channels which priority is not among the priorities of the selected radio resource pool because otherwise the resulting ratio would fall below the previously defined value(s). Alternatively, the ratio could be defined such that only a certain amount of time or SC periods, the transmission of data of sidelink logical channels not matching the priority of the selected resource pool are blocked/not performed. For example it could be defined, respectively configured, that the UE is every other SC period performing sidelink data communication according to the first embodiment. The other SC periods the UE is performing sidelink communication according to the current specified procedure. These variants of the first embodiment provide a trade-off between the advantages of using high-priority radio resources for only high-priority sidelink data and of increasing data throughput by also considering lower-priority data thus also avoiding that lower-priority data is stalled.

*Second embodiment*

In the following a second embodiment is presented which deals with the same problem as the one solved by the first embodiment, i.e. the one explained in connection with Fig. 9.

The same assumptions as made for the first embodiment can be made for the second embodiment too. In brief, a ProSe-enabled UE is assumed to be configured with various sidelink logical channels, each being associated with a sidelink destination and with a particular priority, (e.g. the PPPP of the data served by the sidelink logical channels). The UE is operated in the UE-autonomous resource selection, Mode 2, such that the UE is configured with one or more suitable radio resource pools from which the UE can then select radio resources usable to transmit sidelink data when selecting a sidelink grant. The radio resource pool(s) are in turn associated with one or more priorities. Sidelink data, entering the transmission buffers of the sidelink logical channels, is to be transmitted by the UE in the next SC period. The sidelink data transmission is performed by selecting and using suitable transmission patterns, defining the timing the first MAC PDU transmission and its three retransmissions.

The second embodiment also provides an improved sidelink data transfer, however provides different steps compared to the first embodiment as will be explained in the following. The improved SA data transfer according to the second embodiment mainly differs from the first embodiment in how the resource pool is selected by the UE and in how the amount of sidelink data to be transmitted is determined by the UE. The remaining steps of the sidelink transfer as explained for the first embodiment can remain mostly the same.

In particular, the UE may select a sidelink destination as explained in connection with the first embodiment. In brief, the UE selects either the only sidelink destination for which data is pending for transmission, or selects one of multiple sidelink destinations for which data is pending for transmission. In the latter case, the UE may select that sidelink destination that is associated with the sidelink logical channel having the highest priority among all those sidelink logical channels for which data is available. In an exemplary LTE-(A) embodiment this step may be implemented as part of the sidelink logical channel prioritization procedure, applied by the UE when a new transmission is to be performed.

After having selected the sidelink destination, the UE may continue with the selection of the sidelink grant, which involves the selection of a suitable radio resource pool. In a similar manner as with the first embodiment, the selection of the radio resource pool according to the second embodiment is based on the radio resource pool priority as well as on the priorities of the sidelink data to be transmitted to the selected sidelink destination, although it is done differently. In more detail, the UE, operating according to the second embodiment, determines the lowest priority among the priorities of the sidelink logical channels that are associated with the selected sidelink destination, and then compares this lowest sidelink logical channel priority to the priorities of the resource pools so as to select that radio resource pool having a priority (e.g. in its priority list) which is the same or lower than said lowest sidelink logical channel priority. Put differently, according to the second embodiment, the UE shall select the radio resource pool which priority matches with the lowest-priority sidelink logical channel such that the UE avoids selecting a radio resource pool having a higher priority than justified by the lowest-priority data served in the sidelink logical channels destined to the selected sidelink destination. As a result, the UE always selects the radio resource pool with the lowest possible priority (when considering the priorities of the sidelink logical channels).

Furthermore, the step of determining the amount of data to transmit in the next SC period to the selected sidelink destination is performed as defined for the current specification (i.e. thus different from the first embodiment), namely by considering all the sidelink logical channels carrying data that is destined to the selected sidelink destination, irrespective of the priority of the sidelink logical channel. Put differently, the UE determines the amount of data to transmit in the next SC period among the data that is carried by sidelink logical channels that are associated with the selected sidelink destination. Again, the UE may determine to transmit less data than is currently pending across all sidelink logical channels having data pending towards the selected sidelink destination.

After having thus determined the amount of sidelink data to be transmitted, the UE can proceed to prepare and perform the actual transmission of the data as already discussed in detail for the first embodiment. In brief, various transmission parameters that are necessary to perform the transmission are determined by the UE and then applied to the actual transmission over the sidelink interface. Some of these parameters are directly dependent on the amount of data that was previously determined. Some of the transmission parameters comprise the radio resources selected from the radio resource pool, the data transmission pattern defining the timing of the various data transmissions within the SC period, the modulation scheme and the coding rate, as well as the transport block size.

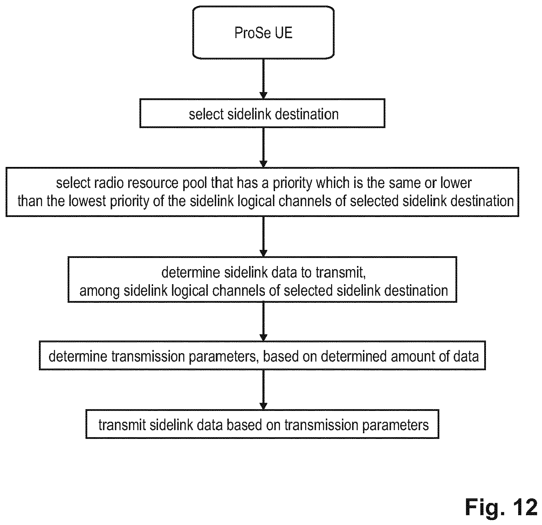

Fig. 12 is an exemplary and simplified sequence diagram for the UE operation according to the second embodiment, illustrating the relevant steps to be performed by the UE as outlined above. The illustrated UE operation of Fig. 12 is greatly simplified, focusing on the most relevant steps performed by the UE so as to achieve the improved sidelink data transfer according to the second embodiment. Possible variants of the second embodiment are not illustrated in Fig. 12.

The second embodiment provides a sidelink data transfer which avoids that high-priority radio resources are congested by the transmission of low-priority data, since the selection of the radio resource pool directly depends on the lowest priority among the priorities of the sidelink logical channels which data is to be transmitted to the selected sidelink destination. Furthermore, more sidelink data can be transmitted within an SC period, compared to the first embodiment, since the UE determines the amount of data, based on whether the sidelink logical channel carries data destined to the selected sidelink destination, but does not take into account whether the sidelink logical channel has a priority which is included or not in the priority list of the selected radio resource pool. One drawback involved in the second embodiment is that, due to selecting the radio resource pool based on the lowest available priority among the priorities of the sidelink logical channels, also higher-priority data is transmitted by using the lower-priority radio resources of the selected radio resource pool.

As explained above, the determination of the amount of data to transmit according to the second embodiment is not changed with regard to the current specification and the 3GPP standards. Correspondingly, in one specific exemplary embodiment implemented in such a 3GPP LTE environment, the UE may perform a sidelink logical channel prioritization procedure as currently defined in 3GPP TS 36.321 so as to allocate radio resources, selected from the selected radio resource pool, to sidelink logical channels so as to generate a new sidelink transmission.

Again, a sidelink data communication usually comprises transmission of sidelink control information at the beginning of the SC period in order for the receiving UE to determine the transmission parameters so as to then be able to receive and correctly decode the subsequent sidelink data. This may equally be the case for the improved sidelink data transfer according to the second embodiment.

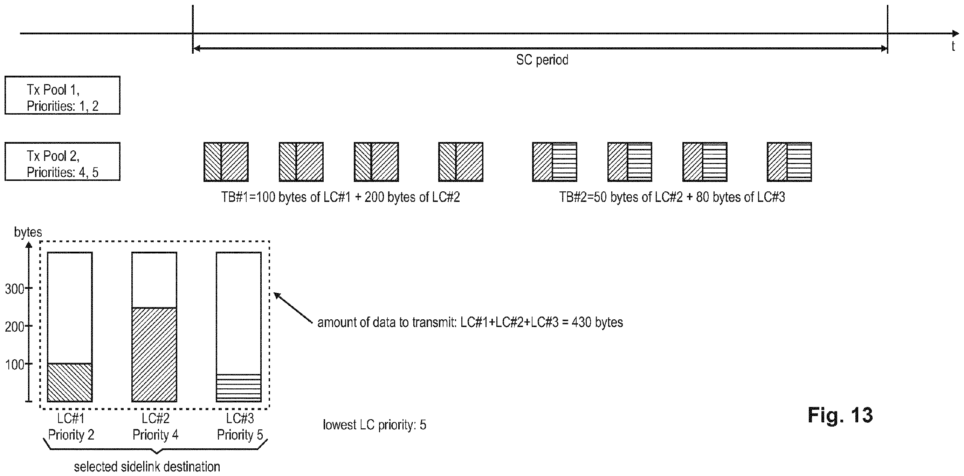

The second embodiment is exemplarily discussed with regard to Fig. 13, which is based on the same scenario as already used for explaining the sidelink data transfer according to the prior art as well as the improved sidelink data transfer according to the first embodiment. In particular, the exemplary scenario assumes three sidelink logical channels having different priorities, respectively 2, 4, and 5, but having sidelink data destined to the same (selected) sidelink destination. Correspondingly, the UE will select the single sidelink destination as a destination of the data to be transmitted in the next SC period. Furthermore, the UE is configured with two resource pools, being associated with respective priorities, namely resource pool 1 with priorities 1, 2, thus being a high-priority resource pool only intended for the high(est)-priority data. The second resource pool is assigned with only the priority 5, thus being intended for mid-level-priority data. According to the second embodiment, the lowest priority among the priorities of the sidelink logical channels is taking as the reference, i.e. priority 5. This priority is then compared to the priorities of the available radio resource pools, such that the second radio resource pool, having the same priority 5, will be selected by the UE.

As apparent from Fig. 13, it is assumed that data is pending for the sidelink logical channels 1, 2 and 3, 430 bytes in total. According to the second embodiment, the UE selects data to be transmitted among the total 430 bytes for transmission to the sidelink destination, and it is assumed that the full 430 bytes are to be transmitted in the next SC period (although the UE could decide to transmit less). For illustration purposes it is assumed that a data transmission pattern is selected by the UE according to which two transport blocks can be transmitted in the SC period. Thus, the UE for instance decides to carry 300 bytes with the first transport block (MAC PDU) and 130 bytes with the second transport block (MAC PDU). The sidelink LCP procedure would be performed accordingly by allocating radio resources, previously selected from the selected radio resource pool #2, to the sidelink logical channels, in a decreasing order of priority, thereby filling the first transport block with 100 bytes from LC#1 and 200 bytes of LC#2 and filling the second transport block with the remaining 50 bytes of LC#2 and all of the 80 bytes of LC#3. The transport blocks are transmitted by the UE using a suitable transmission pattern (involving a first transmission of the transport block, and three re-transmissions thereof), as illustrated in Fig. 13. In order to provide a simple illustration, the transmission of sidelink control information has been omitted in Fig. 13.

As can be appreciated from Fig. 13, the second embodiment allows the UE to transmit the full 430 bytes to the sidelink destination within a single SC period. Furthermore, the high-priority radio resources provided by the first radio resource pool are not used for performing the sidelink data transmission and thus are not congested by the transmission of the mid level priority data, when compared to the currently specified sidelink data transfer as illustrated in Fig. 9. On the other hand, it should be noted that also the high priority data carried by this first sidelink logical channel is carried by the low-priority radio resources.

*Further aspects*

According to a first aspect, a transmitting user terminal is provided for performing a direct communication transmission over a sidelink connection to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The transmitting user terminal comprises a processor and transmitter as follow. A processor selects a sidelink destination and selects one of the at least one radio resource pool. The processor further determines the amount of sidelink data to transmit, among the sidelink data being available for transmission from those sidelink logical channels that are associated with the selected sidelink destination and that have a priority that is among the at least one priority associated with the selected radio resource pool. The processor further determines transmission parameters for performing the transmission of the determined amount of sidelink data. The transmitter transmits the determined amount of sidelink data based on the determined transmission parameters.According to a second aspect which is provided in addition to the first aspect, if the transmitting user terminal is configured with a plurality of radio resource pools, the processor selects that radio resource pool that is associated with the highest priority among the priorities of the sidelink logical channels associated with the selected sidelink destination.

According to a third aspect which is provided in addition to the first or second aspects, some of the transmission parameters are determined based on the determined amount of data and comprise at least one of: time and frequency radio resources from the selected radio resource pool, a Modulation and Coding scheme, a sidelink data transmission pattern, a sidelink control information transmission pattern, a transport block size.

According to a fourth aspect which is provided in addition to one of the first to third aspects, the processor performs the selection of the sidelink destination by selecting that sidelink destination that is associated with the sidelink logical channel having the highest priority among the sidelink logical channels having data available for transmission.

According to a fifth aspect which is provided in addition to one of the first to fourth aspects, the transmitter transmits sidelink control information for the determined amount of sidelink data based on a sidelink control information transmission pattern. Optionally, the sidelink control information comprises information on some of the transmission parameters used by the transmitting user terminal for the transmission of the sidelink data.

According to a sixth aspect which is provided in addition to one of the first to fifth aspects, the processor further performs a logical channel prioritization, LCP, procedure, so as to allocate radio resources, selected by the transmitting user terminal from the selected radio resource pool, in a decreasing order of priorities to those sidelink logical channels that are associated with the selected sidelink destination. Optionally, the LCP consider only sidelink logical channels that have a priority that is among the at least one priority associated with the selected radio resource pool.

According to a seventh aspect which is provided in addition to one of the first to sixth aspects, the processor, when determining the transmission parameters, further selects radio resources from the selected radio resource pool.

According to an eight aspect which is provided in addition to one of the first to seventh aspects, when the processor determines the amount of sidelink data to transmit, it also considers sidelink data available for transmission from those sidelink logical channels that are associated with the selected sidelink destination and that have a priority that is not among the at least one priority associated with the selected radio resource pool, such that sidelink data from sidelink logical channels having a priority that is not among the at least one priority associated with the selected radio resource pool is not stalled. This may optionally be achieved by operating a timer associated with sidelink data from sidelink logical channels having a priority that is not among the at least one priority associated with the selected radio resource pool or by monitoring a ratio between sidelink data transmitted from a sidelink logical channel having a priority that is among the at least one priority associated with the selected radio resource pool and sidelink data transmitted from a sidelink logical channel having a priority that is not among the at least one priority associated with the selected radio resource pool.

According to a ninth aspect, a transmitting user terminal is provided for performing a direct communication transmission over a sidelink connection to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with a plurality of radio resource pools, each radio resource pool indicating radio resources usable by the transmitting user terminal for performing a direct communication transmission, and each radio resource pool being associated with at least one priority. The transmitting user terminal comprises a processor and a transmitter as follows. A processor selects a sidelink destination. The processor further selects one of the at least one radio resource pool, the selected one being associated with a priority which is the same or lower than the lowest priority among the priorities of the sidelink logical channels associated with the selected sidelink destination. The processor further determines the amount of sidelink data to transmit, among the sidelink data being available for transmission from those sidelink logical channels that are associated with the selected sidelink destination. The processor further determines transmission parameters for performing the transmission of the determined amount of sidelink data. The transmitter transmits the determined amount of sidelink data based on the determined transmission parameters.

According to a tenth aspect which is provided in addition to ninth aspect, the processor performs the selection of the sidelink destination by selecting that sidelink destination that is associated with the sidelink logical channel having the highest priority among the sidelink logical channels having data available for transmission.

According to an eleventh aspect which is provided in addition to ninth and tenth aspects, the transmitter further transmits sidelink control information for the determined amount of sidelink data based on a sidelink control information transmission pattern. Optionally, the control information comprises information on some of the transmission parameters used by the transmitting user terminal for the transmission of the sidelink data.

According to a twelfth aspect, a method is provided for performing a direct communication transmission over a sidelink connection from a transmitting user terminal to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The method comprises the step of selecting a sidelink destination and selecting one of the at least one radio resource pool.

Furthermore, the amount of sidelink data to transmit is determined, among the sidelink data being available for transmission from those sidelink logical channels that are associated with the selected sidelink destination and that have a priority that is among the at least one priority associated with the selected radio resource pool. Transmission parameters are determined for performing the transmission of the determined amount of sidelink data. The determined amount of sidelink data is then transmitted based on the determined transmission parameters.

According to a thirteenth aspect provided in addition to the twelfth aspect, if the transmitting user terminal is configured with a plurality of radio resource pools, the step of selecting the radio resource pool selects that radio resource pool that is associated with the highest priority among the priorities of the sidelink logical channels associated with the selected sidelink destination.

According to a fourteenth aspect provided in addition to the twelfth or thirteenth aspect, some of the transmission parameters are determined based on the determined amount of data and comprise at least one of: time and frequency radio resources from the selected radio resource pool, a Modulation and Coding scheme, a sidelink data transmission pattern, a sidelink control information transmission pattern, a transport block size.

According to a fifteenth aspect provided in addition to the twelfth to fourteenth aspects, the step of selecting the sidelink destination selects that sidelink destination that is associated with the sidelink logical channel having the highest priority among the sidelink logical channels having data available for transmission.

According to a sixteenth aspect provided in addition to the twelfth to fifteenth aspects, the method further comprises the step of transmitting by the transmitting user terminal sidelink control information for the determined amount of sidelink data based on a sidelink control information transmission pattern. Optionally, the sidelink control information comprises information on some of the transmission parameters used by the transmitting user terminal for the transmission of the sidelink data.

According to a seventeenth aspect provided in addition to the twelfth to sixteenth aspects, the method comprises the further step of performing by the transmitting user terminal a logical channel prioritization, LCP, procedure, so as to allocate radio resources, selected by the transmitting user terminal from the selected radio resource pool, in a decreasing order of priorities to those sidelink logical channels that are associated with the selected sidelink destination, and optionally that have a priority that is among the at least one priority associated with the selected radio resource pool.

According to a eighteenth aspect provided in addition to the twelfth to seventeenth aspects, the step of determining the transmission parameters comprises selecting radio resources from the selected radio resource pool.

According to a nineteenth aspect provided in addition to the twelfth to eighteenth aspects, the step of determining the amount of sidelink data to transmit also considers sidelink data available for transmission from those sidelink logical channels that are associated with the selected sidelink destination and that have a priority that is not among the at least one priority associated with the selected radio resource pool, such that sidelink data from sidelink logical channels having a priority that is not among the at least one priority associated with the selected radio resource pool is not stalled. One option is that this is achieved by operating a timer associated with sidelink data from sidelink logical channels having a priority that is not among the at least one priority associated with the selected radio resource pool or by monitoring a ratio between sidelink data transmitted from a sidelink logical channel having a priority that is among the at least one priority associated with the selected radio resource pool and sidelink data transmitted from a sidelink logical channel having a priority that is not among the at least one priority associated with the selected radio resource pool.

According to a twentieth aspect, a method is provided for performing a direct communication transmission over a sidelink connection from a transmitting user terminal to a receiving user terminal in a communication system. A plurality of sidelink logical channels is configured in the transmitting user terminal, each sidelink logical channel being associated with one out of a plurality of sidelink destinations as possible destination of sidelink data, and each sidelink logical channel being associated with a priority. The transmitting user terminal is configured with at least one radio resource pool, each radio resource pool indicating radio resources usable by the transmitting user terminal for performing a direct communication transmission, and each radio resource pool being associated with at least one priority. The method comprises the following step of selecting a sidelink destination. Further, one of the at least one radio resource pool is selected, the selected one being associated with a priority which is the same or lower than the lowest priority among the priorities of the sidelink logical channels associated with the selected sidelink destination. The amount of sidelink data to transmit is determined, among the sidelink data being available for transmission from those sidelink logical channels that are associated with the selected sidelink destination. Transmission parameters for performing the transmission of the determined amount of sidelink data are determined too. The determined amount of sidelink data is then transmitted based on the determined transmission parameters.

According to a 21st aspect provided in addition to the twentieth aspect, the step of selecting the sidelink destination selects that sidelink destination that is associated with the sidelink logical channel having the highest priority among the sidelink logical channels having data available for transmission.

According to a 22nd aspect provided in addition to the twentieth and 21st aspect, the method comprises the further step of transmitting by the transmitting user terminal sidelink control information for the determined amount of sidelink data based on a sidelink control information transmission pattern. Optionally, the sidelink control information comprises information on some of the transmission parameters used by the transmitting user terminal for the transmission of the sidelink data.

**Hardware and Software Implementation of the present disclosure**

Other exemplary embodiments relate to the implementation of the above described various embodiments using hardware, software, or software in cooperation with hardware. In this connection a user terminal (mobile terminal) is provided. The user terminal is adapted to perform the methods described herein, including corresponding entities to participate appropriately in the methods, such as receiver, transmitter, processors.

It is further recognized that the various embodiments may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments may also be performed or embodied by a combination of these devices. In particular, each functional block used in the description of each embodiment described above can be realized by an LSI as an integrated circuit. They may be individually formed as chips, or one chip may be formed so as to include a part or all of the functional blocks. They may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit or a general-purpose processor. In addition, a FPGA (Field Programmable Gate Array) that can be programmed after the manufacture of the LSI or a reconfigurable processor in which the connections and the settings of circuits cells disposed inside the LSI can be reconfigured may be used.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

**Claims**

1. A transmitting user terminal for performing a direct communication transmission over a sidelink connection to a receiving user terminal in a communication system, wherein a plurality of sidelink logical channels is configured in the transmitting user terminal, each sidelink logical channel being associated with one out of a plurality of sidelink destinations as possible destination of sidelink data, and each sidelink logical channel being associated with a priority, wherein the transmitting user terminal is configured with at least one radio resource pool, each radio resource pool indicating radio resources usable by the transmitting user terminal for performing a direct communication transmission, and each radio resource pool being associated with at least one priority, wherein the transmitting user terminal comprises:

> a processor configured to select a sidelink destination,
> the processor further configured to select one of the at least one radio resource pool,
> the processor further configured to determine the amount of sidelink data to transmit, among the sidelink data being available for transmission from those sidelink logical channels that are associated with the selected sidelink destination and that have a priority that is among the at least one priority associated with the selected radio resource pool,
> the processor further configured to determine transmission parameters for performing the transmission of the determined amount of sidelink data, and
> a transmitter configured to transmit the determined amount of sidelink data based on the determined transmission parameters,
> **characterized in that** the processor is configured to determine the amount of sidelink data to transmit also among sidelink data available for transmission from those sidelink logical channels that are associated with the selected sidelink destination and that have a priority that is not among the at least one priority associated with the selected radio resource pool, such that sidelink data from sidelink logical channels having a priority that is not among the at least one priority associated with the selected radio resource pool is not stalled,
by operating a timer associated with sidelink data from sidelink logical channels having a priority that is not among the at least one priority associated with the selected radio resource pool or by monitoring a ratio between sidelink data transmitted from a sidelink logical channel having a priority that is among the at least one priority associated with the selected radio resource pool and sidelink data transmitted from a sidelink logical channel having a priority that is not among the at least one priority associated with the selected radio resource pool.

2. The transmitting user terminal according to claim 1, wherein, if the transmitting user terminal is configured with a plurality of radio resource pools, the processor is configured to select that radio resource pool that is associated with the highest priority among the priorities of the sidelink logical channels associated with the selected sidelink destination.

3. The transmitting user terminal according to claim 1 or 2, wherein some of the transmission parameters are determined based on the determined amount of data and comprise at least one of:
   ◦ time and frequency radio resources from the selected radio resource pool, a Modulation and Coding scheme, a sidelink data transmission pattern, a sidelink control information transmission pattern, a transport block size.

4. The transmitting user terminal according to one of claims 1 to 3, wherein the processor is configured to perform the selection of the sidelink destination by selecting that sidelink destination that is associated with the sidelink logical channel having the highest priority among the sidelink logical channels having data available for transmission.

5. The transmitting user terminal according to one of claims 1 to 4, wherein the transmitter is further configured to transmit sidelink control information for the determined amount of sidelink data based on a sidelink control information transmission pattern, optionally wherein the sidelink control information comprises information on some of the transmission parameters used by the transmitting user terminal for the transmission of the sidelink data.

6. The transmitting user terminal according to one of claims 1 to 5, wherein the processor is further configured to perform a logical channel prioritization, LCP, procedure, so as to allocate radio resources, selected by the transmitting user terminal from the selected radio resource pool, in a decreasing order of priorities to those sidelink logical channels that are associated with the selected sidelink destination, and optionally that have a priority that is among the at least one priority associated with the selected radio resource pool.

7. The transmitting user terminal according to one of claims 1 to 6, wherein the processor, when determining the transmission parameters, is further configured to select radio resources from the selected radio resource pool.

8. A method for performing a direct communication transmission over a sidelink connection from a transmitting user terminal to a receiving user terminal in a communication system, wherein a plurality of sidelink logical channels is configured in the transmitting user terminal, each sidelink logical channel being associated with one out of a plurality of sidelink destinations as possible destination of sidelink data, and each sidelink logical channel being associated with a priority,
wherein the transmitting user terminal is configured with at least one radio resource pool, each radio resource pool indicating radio resources usable by the transmitting user terminal for performing a direct communication transmission, and each radio resource pool being associated with at least one priority, the method comprising the following steps performed by the transmitting user terminal:

selecting a sidelink destination,
selecting one of the at least one radio resource pool,
determining the amount of sidelink data to transmit, among the sidelink data being available for transmission from those sidelink logical channels that are associated with the selected sidelink destination and that have a priority that is among the at least one priority associated with the selected radio resource pool,
determining transmission parameters for performing the transmission of the determined amount of sidelink data, and
transmitting the determined amount of sidelink data based on the determined transmission parameters,

**characterized in that** the step of determining determines the amount of sidelink data to transmit also among sidelink data available for transmission from those sidelink logical channels that are associated with the selected sidelink destination and that have a priority that is not among the at least one priority associated with the selected radio resource pool, such that sidelink data from sidelink logical channels having a priority that is not among the at least one priority associated with the selected radio resource pool is not stalled,
by operating a timer associated with sidelink data from sidelink logical channels having a priority that is not among the at least one priority associated with the selected radio resource pool or by monitoring a ratio between sidelink data transmitted from a sidelink logical channel having a priority that is among the at least one priority associated with the selected radio resource pool and sidelink data transmitted from a sidelink logical channel having a priority that is not among the at least one priority associated with the selected radio resource pool.

9. The method according to claim 8, wherein, if the transmitting user terminal is configured with a plurality of radio resource pools, the step of selecting the radio resource pool selects that radio resource pool that is associated with the highest priority among the priorities of the sidelink logical channels associated with the selected sidelink destination.

10. The method according to claim 8 or 9, wherein some of the transmission parameters are determined based on the determined amount of data and comprise at least one of:
◦ time and frequency radio resources from the selected radio resource pool, a Modulation and Coding scheme, a sidelink data transmission pattern, a sidelink control information transmission pattern, a transport block size.

11. The method according to one of claims 8 to 10, wherein the step of selecting the sidelink destination selects that sidelink destination that is associated with the sidelink logical channel having the highest priority among the sidelink logical channels having data available for transmission.

**Patentansprüche**

1. Sendendes Endgerät zum Durchführen eines direkten Kommunikationssendens über eine Sidelink-Verbindung an ein empfangendes Endgerät in einem Kommunikationssystem, wobei eine Vielzahl von logischen Sidelink-Kanälen im sendenden Endgerät konfiguriert ist, wobei jeder logische Sidelink-Kanal mit einem aus einer Vielzahl von Sidelink-Zielen als mögliches Ziel von Sidelink-Daten verknüpft ist und jeder logische Sidelink-Kanal mit einer Priorität verknüpft ist,
wobei das sendende Endgerät mit wenigstens einem Funkressourcenpool ausgebildet ist, jeder Funkressourcenpool vom sendenden Endgerät zum Durchführen eines direkten Kommunikationssendens verwendbare Funkressourcen angibt und jeder Funkressourcenpool mit wenigstens einer Priorität verknüpft ist,
wobei das sendende Endgerät umfasst:

einen zum Auswählen eines Sidelink-Ziels ausgebildeten Prozessor,
wobei der Prozessor ferner zum Auswählen von einem des wenigstens einen Funkressourcenpools ausgebildet ist,
wobei der Prozessor ferner zum Bestimmen der Menge von Sidelink-Daten zum Senden aus den zum Senden verfügbaren Sidelink-Daten von den logischen Sidelink-Kanälen, die mit dem ausgewählten Sidelink-Ziel verknüpft sind und die eine Priorität aufweisen, die zu der wenigstens einen mit dem ausgewählten Funkressourcenpool verknüpften Priorität gehört, ausgebildet ist,
wobei der Prozessor ferner zum Bestimmen von Sendeparametern zum Durchführen des Sendens der bestimmten Menge von Sidelink-Daten ausgebildet ist, und
einen zum Senden der bestimmten Menge von Sidelink-Daten auf der Basis der bestimmten Sendeparameter ausgebildeten Sender,
**dadurch gekennzeichnet, dass** der Prozessor zum Bestimmen der Menge von Sidelink-Daten zum Senden ebenfalls aus zum Senden verfügbaren Sidelink-Daten von den logischen Sidelink-Kanälen, die mit dem ausgewählten Sidelink-Ziel verknüpft sind und die eine Priorität aufweisen, die nicht zu der wenigstens einen mit dem ausgewählten Funkressourcenpool verknüpften Priorität gehört, ausgebildet ist, so dass Sidelink-Daten von logischen Sidelink-Kanälen mit einer Priorität, die nicht zu der wenigstens einen mit dem ausgewählten Funkressourcenpool gehört, nicht blockiert werden,
durch Betreiben eines mit Sidelink-Daten von logischen Sidelink-Kanälen mit einer Priorität, die nicht zu der wenigstens einen mit dem ausgewählten Funkressourcenpool verknüpften Priorität gehört, verknüpften Zeitgebers oder durch Überwachen eines Verhältnisses zwischen von einem logischen Sidelink-Kanal mit einer Priorität, die zu der wenigstens einen mit dem ausgewählten Funkressourcenpool verknüpften Priorität gehört, gesendeten Sidelink-Daten und von einem logischen Sidelink-Kanal mit einer Priorität, die nicht zu der wenigstens einen mit dem ausgewählten Funkressourcenpool verknüpften Priorität gehört, gesendeten Sidelink-Daten.

2. Sendendes Endgerät nach Anspruch 1, wobei, wenn das sendende Endgerät mit einer Vielzahl von Funkressourcenpools ausgebildet ist, der Prozessor zum Auswählen des Funkressourcenpools ausgebildet ist, der mit der höchsten Priorität aus den Prioritäten der mit dem ausgewählten Sidelink-Ziel verknüpften logischen Sidelink-Kanäle verknüpft ist.

3. Sendendes Endgerät nach Anspruch 1 oder 2, wobei einige der Sendeparameter auf der Basis der bestimmten Datenmenge bestimmt werden und wenigstens ein Element umfassen der Gruppe umfassend:
Zeit- und Frequenzfunkressourcen vom ausgewählten Funkressourcenpool, ein Modulations- und Codierschema, ein Sidelink-Datensendemuster, ein Sidelink-Steuerinformationssendemuster, eine Transportblockgröße.

4. Sendendes Endgerät nach einem der Ansprüche 1 bis 3, wobei der Prozessor zum Durchführen der Auswahl des Sidelink-Ziels durch Auswählen des Sidelink-Ziels, das mit dem logischen Sidelink-Kanal mit der höchsten Priorität aus den logischen Sidelink-Kanälen mit zum Senden verfügbaren Daten verknüpft ist, ausgebildet ist.

5. Sendendes Endgerät nach einem der Ansprüche 1 bis 4, wobei der Sender ferner zum Senden einer Sidelink-Steuerinformation für die bestimmte Menge von Sidelink-Daten auf der Basis eines Sidelink-Steuerinformationssendemusters ausgebildet ist, wobei die Sidelink-Steuerinformation optional eine Information zu einigen der vom sendenden Endgerät zum Senden der Sidelink-Daten verwendeten Sendeparameter umfasst.

6. Sendendes Endgerät nach einem der Ansprüche 1 bis 5, wobei der Prozessor ferner zum Durchführen eines Logical-Channel-Prioritization-(LCP-)Vorgangs ausgebildet ist, um Funkressourcen, ausgewählt durch das sendende Endgerät vom ausgewählten Funkressourcenpool, in einer absteigenden Reihenfolge von Prioritäten den logischen Sidelink-Kanälen zuzuordnen, die mit dem ausgewählten Sidelink-Ziel verknüpft sind und die optional eine Priorität aufweisen, die zu der wenigstens einen mit dem ausgewählten Funkressourcenpool verknüpften Priorität gehört.

7. Sendendes Endgerät nach einem der Ansprüche 1 bis 6, wobei der Prozessor beim Bestimmen der Sendeparameter ferner zum Auswählen von Funkressourcen vom ausgewählten Funkressourcenpool ausgebildet ist.

8. Verfahren zum Durchführen eines direkten Kommunikationssendens über eine Sidelink-Verbindung von einem sendenden Endgerät an ein empfangendes Endgerät in einem Kommunikationssystem, wobei eine Vielzahl von logischen Sidelink-Kanälen im sendenden Endgerät konfiguriert ist, wobei jeder logische Sidelink-Kanal mit einem aus einer Vielzahl von Sidelink-Zielen als mögliches Ziel von Sidelink-Daten verknüpft ist und jeder logische Sidelink-Kanal mit einer Priorität verknüpft ist,
wobei das sendende Endgerät mit wenigstens einem Funkressourcenpool ausgebildet ist, jeder Funkressourcenpool vom sendenden Endgerät zum Durchführen eines direkten Kommunikationssendens verwendbare Funkressourcen angibt und jeder Funkressourcenpool mit wenigstens einer Priorität verknüpft ist, wobei das Verfahren die folgenden vom sendenden Endgerät durchgeführten Schritte umfasst:

Auswählen eines Sidelink-Ziels,
Auswählen von einem des wenigstens einen Funkressourcenpools,
Bestimmen der Menge von Sidelink-Daten zum Senden aus den zum Senden verfügbaren Sidelink-Daten von den logischen Sidelink-Kanälen, die mit dem ausgewählten Sidelink-Ziel verknüpft sind und die eine Priorität aufweisen, die zu der wenigstens einen mit dem ausgewählten Funkressourcenpool verknüpften Priorität gehört,
Bestimmen von Sendeparametern zum Durchführen des Sendens der bestimmten Menge von Sidelink-Daten, und
Senden der bestimmten Menge von Sidelink-Daten auf der Basis der bestimmten Sendeparameter,
**dadurch gekennzeichnet, dass**
der Schritt zum Bestimmen die Menge von Sidelink-Daten zum Senden ebenfalls aus zum Senden verfügbaren Sidelink-Daten von den logischen Sidelink-Kanälen, die mit dem ausgewählten Sidelink-Ziel verknüpft sind und die eine Priorität aufweisen, die nicht zu der wenigstens einen mit dem ausgewählten Funkressourcenpool verknüpften Priorität gehört, bestimmt, so dass Sidelink-Daten von logischen Sidelink-Kanälen mit einer Priorität, die nicht zu der wenigstens einen mit dem ausgewählten Funkressourcenpool gehört, nicht blockiert werden,
durch Betreiben eines mit Sidelink-Daten von logischen Sidelink-Kanälen mit einer Priorität, die nicht zu der wenigstens einen mit dem ausgewählten Funkressourcenpool verknüpften Priorität gehört, verknüpften Zeitgebers oder durch Überwachen eines Verhältnisses zwischen von einem logischen Sidelink-Kanal mit einer Priorität, die zu der wenigstens einen mit dem ausgewählten Funkressourcenpool verknüpften Priorität gehört, gesendeten Sidelink-Daten und von einem logischen Sidelink-Kanal mit einer Priorität, die nicht zu der wenigstens einen mit dem ausgewählten Funkressourcenpool verknüpften Priorität gehört, gesendeten Sidelink-Daten.

9. Verfahren nach Anspruch 8, wobei, wenn das sendende Endgerät mit einer Vielzahl von Funkressourcenpools ausgebildet ist, der Schritt zum Auswählen des Funkressourcenpools den Funkressourcenpool auswählt, der mit der höchsten Priorität aus den Prioritäten der mit dem ausgewählten Sidelink-Ziel verknüpften logischen Sidelink-Kanäle verknüpft ist.

10. Verfahren nach Anspruch 8 oder 9, wobei einige der Sendeparameter auf der Basis der bestimmten Datenmenge bestimmt werden und wenigstens ein Element umfassen der Gruppe umfassend:
Zeit- und Frequenzfunkressourcen vom ausgewählten Funkressourcenpool, ein Modulations- und Codierschema, ein Sidelink-Datensendemuster, ein Sidelink-Steuerinformationssendemuster, eine Transportblockgröße.

11. Verfahren nach einem der Ansprüche 8 bis 10, wobei der Schritt zum Durchführen des Auswählens des Sidelink-Ziels das Sidelink-Ziel auswählt, das mit dem logischen Sidelink-Kanal mit der höchsten Priorität aus den logischen Sidelink-Kanälen mit zum Senden verfügbaren Daten verknüpft ist.

**Revendications**

1. Terminal utilisateur d'émission destiné à effectuer une transmission par communication directe sur une connexion de liaison latérale vers un terminal utilisateur de réception, une pluralité de canaux logiques de liaison latérale étant configurée dans le terminal utilisateur d'émission, chaque canal logique de liaison latérale étant associé avec une destination prise comme destination cible des données de liaison latérale parmi une pluralité de destinations de liaison latérale, et chaque canal logique de liaison latérale étant associé à une priorité,
dans lequel le terminal utilisateur d'émission est configuré avec au moins un regroupement de ressources radio, chaque regroupement de ressources radio indiquant des ressources radio utilisables par le terminal utilisateur d'émission dans le but d'effectuer une transmission par communication directe, et chaque regroupement de ressources radio étant associé à au moins une priorité,
dans lequel le terminal utilisateur d'émission comprend :

un processeur configuré pour sélectionner une destination de liaison latérale,
le processeur étant en outre configuré pour sélectionner l'un du ou des regroupements de ressources radio,
le processeur étant en outre configuré pour déterminer la quantité de données de liaison latérale à transmettre parmi les données de liaison latérale disponibles pour une transmission à partir des canaux logiques de liaison latérale qui sont associés à la destination de liaison latérale sélectionnée et qui présentent une priorité qui se trouve parmi la ou les priorités associées au regroupement de ressources radio sélectionné, le processeur étant en outre configuré pour déterminer des paramètres de transmission afin d'effectuer la transmission de la quantité déterminée de données de liaison latérale, et un émetteur configuré pour transmettre la quantité déterminée de données de liaison latérale sur la base des paramètres de transmission déterminés,

**caractérisé en ce que**

le processeur est configuré pour déterminer la quantité de données de liaison latérale à transmettre également parmi les données de liaison latérale disponibles pour une transmission à partir des canaux logiques de liaison latérale qui sont associés avec la destination de liaison latérale sélectionnée et qui présentent une priorité qui ne se trouve pas parmi la ou les priorités associées au regroupement de ressources radio sélectionné, de sorte à ce que des données de liaison latérale provenant de canaux logiques de liaison latérale présentant une priorité qui ne se trouve pas parmi la ou les priorités associées au regroupement de ressources radio sélectionné ne soient pas bloquées, en mettant en oeuvre une horloge associée à des données de liaison latérale provenant de canaux logiques de liaison latérale présentant une priorité qui ne se trouve pas parmi la ou les priorités associées au regroupement de ressources radio sélectionné, ou bien en surveillant un rapport entre les données de liaison latérale transmises à partir d'un canal logique de liaison latérale présentant une priorité qui se trouve parmi la ou les priorités associées au regroupement de ressources radio sélectionné, et des données de liaison latérale transmises à partir d'un canal logique de liaison latérale présentant une priorité qui ne se trouve pas parmi la ou les priorités associées au regroupement de ressources radio sélectionné.

2. Terminal utilisateur d'émission selon la revendication 1, dans lequel, si le terminal utilisateur d'émission est configuré avec une pluralité de regroupements de ressources radio, le processeur est configuré pour sélectionner le regroupement de ressources radio qui est associé à la priorité la plus élevée parmi les priorités des canaux logiques de liaison latérale associés à la destination de liaison latérale sélectionnée.

3. Terminal utilisateur d'émission selon la revendication 1 ou la revendication 2, dans lequel certains des paramètres de transmission sont déterminés sur la base de la quantité déterminée de données et comprennent au moins un élément parmi :

- des ressources radio en temps et fréquence à partir du regroupement de ressources radio sélectionné, un schéma de modulation et de codage, une séquence de transmission de données de liaison latérale, une séquence de transmission d'informations de commande de liaison latérale, la taille d'un bloc de transport.

4. Terminal utilisateur d'émission selon l'une des revendications 1 à 3, dans lequel le processeur est configuré pour effectuer la sélection de la destination de liaison latérale en sélectionnant la destination de liaison latérale qui est associée au canal logique de liaison latérale présentant la priorité la plus élevée parmi les canaux logiques de liaison latérale comportant des données disponibles pour une transmission.

5. Terminal utilisateur d'émission selon l'une des revendications 1 à 4, dans lequel l'émetteur est en outre configuré pour transmettre des informations de commande de liaison latérale pour la quantité déterminée de données de liaison latérale sur la base d'une séquence de transmission d'informations de commande de liaison latérale, dans lequel, en option, les informations de commande de liaison latérale comprennent des informations sur certains des paramètres de transmission utilisés par le terminal utilisateur d'émission pour la transmission des données de liaison latérale.

6. Terminal utilisateur d'émission selon l'une des revendications 1 à 5, dans lequel le processeur est en outre configuré pour effectuer une procédure de priorisation de canaux logiques, LCP, de sorte à allouer des ressources radio sélectionnées par le terminal utilisateur d'émission à partir du regroupement de ressources radio sélectionné, selon un ordre décroissant de priorité pour les canaux logiques de liaison latérale qui sont associés à la destination de liaison latérale sélectionnée, et qui présentent en option une priorité qui se trouve parmi la ou les priorités associées au regroupement de ressources radio sélectionné.

7. Terminal utilisateur d'émission selon l'une des revendications 1 à 6, dans lequel le processeur, lorsqu'il détermine les paramètres de transmission, est en outre configuré pour sélectionner des ressources radio à partir du regroupement de ressources radio sélectionné.

8. Procédé permettant d'effectuer une transmission par communication directe sur une connexion de liaison latérale depuis un terminal utilisateur d'émission vers un terminal utilisateur de réception dans un système de communication, une pluralité de canaux logiques de liaison latérale étant configurée dans le terminal utilisateur d'émission, chaque canal logique de liaison latérale étant associé avec une destination prise comme destination cible des données de liaison latérale parmi une pluralité de destinations de liaison latérale, et chaque canal logique de liaison latérale étant associé à une priorité, dans lequel le terminal utilisateur d'émission est configuré avec au moins un regroupement de ressources radio, chaque regroupement de ressources radio indiquant des ressources radio utilisables par le terminal utilisateur d'émission dans le but d'effectuer une transmission par communication directe, et chaque regroupement de ressources radio étant associé à au moins une priorité, le procédé comprenant les étapes suivantes, effectuées par le terminal utilisateur d'émission :

la sélection d'une destination de liaison latérale, la détermination de la quantité de données de liaison latérale à transmettre parmi les données de liaison latérale disponibles pour une transmission à partir des canaux logiques de liaison latérale qui sont associés à la destination de liaison latérale sélectionnée et qui présentent une priorité qui se trouve parmi la ou les priorités associées au regroupement de ressources radio sélectionné, la détermination de paramètres de transmission afin d'effectuer la transmission de la quantité déterminée de données de liaison latérale, et la transmission de la quantité déterminée de données de liaison latérale sur la base des paramètres de transmission déterminés,

**caractérisé en ce que**
l'étape de détermination définit la quantité de données de liaison latérale à transmettre également parmi les données de liaison latérale disponibles pour une transmission à partir des canaux logiques de liaison latérale qui sont associés avec la destination de liaison latérale sélectionnée et qui présentent une priorité qui ne se trouve pas parmi la ou les priorités associées au regroupement de ressources radio sélectionné, de sorte à ce que des données de liaison latérale provenant de canaux logiques de liaison latérale présentant une priorité qui ne se trouve pas parmi la ou les priorités associées au regroupement de ressources radio sélectionné ne soient pas bloquées, en mettant en oeuvre une horloge associée à des données de liaison latérale provenant de canaux logiques de liaison latérale présentant une priorité qui ne se trouve pas parmi la ou les priorités associées au regroupement de ressources radio sélectionné, ou bien en surveillant un rapport entre les données de liaison latérale transmises à partir d'un canal logique de liaison latérale présentant une priorité qui se trouve parmi la ou les priorités associées au regroupement de ressources radio sélectionné, et des données de liaison latérale transmises à partir d'un canal logique de liaison latérale présentant une priorité qui ne se trouve pas parmi la ou les priorités associées au regroupement de ressources radio sélectionné.

9. Procédé selon la revendication 8, dans lequel, si le terminal utilisateur d'émission est configuré avec une pluralité de regroupements de ressources radio, l'étape de sélection du regroupement de ressources radio sélectionne le regroupement de ressources radio qui est associé à la priorité la plus élevée parmi les priorités des canaux logiques de liaison latérale associés à la destination de liaison latérale sélectionnée.

10. Procédé selon la revendication 8 ou la revendication 9, dans lequel certains des paramètres de transmission sont déterminés sur la base de la quantité déterminée de données et comprennent au moins un élément parmi :

- des ressources radio en temps et fréquence à partir du regroupement de ressources radio sélectionné, un schéma de modulation et de codage, une séquence de transmission de données de liaison latérale, une séquence de transmission d'informations de commande de liaison latérale, la taille d'un bloc de transport.

11. Procédé selon l'une des revendications 8 à 10, dans lequel l'étape de sélection de la destination de liaison latérale sélectionne la destination de liaison latérale qui est associée au canal logique de liaison latérale présentant la priorité la plus élevée parmi les canaux logiques de liaison latérale comportant des données disponibles pour une transmission.

**Fig. 1**

Fig. 2

UE-1    UE-2

1. Direct Communication Request

2. Authentication and
establishment of security association

**Fig. 3**

LTE subframe (PUSCH and PUCCH transmissions)    LTE subframe (PUSCH and PUCCH transmissions)

LTE BW

Time

D2D subframe    D2D subframe    D2D subframe

▨ D2D Tx Resource for device 1    ⦚ D2D Tx Resource for device 2    **Fig. 4**

periodic resources used for scheduling assignments

SA by UE1

SA by UE2

▨ data pattern used by UE1    ▨ data pattern used by UE2    **Fig. 5**

SA_mode2_Tx_pool

Mode2 T-RPT Bitmap          Mode2 T-RPT Bitmap          Truncated T-RPT Bitmap          SA_mode2_Tx_pool

SA_offset

SFN#0

Mode2data_offset

Sidelink Control period

t

Scheduling Assignment PDU
&
retransmissions thereof

MAC PDU first transmission
&
retransmissions thereof

**Fig. 6**

SL grant (e.g. DCI format 5)

SA_mode1_Tx_pool

Mode1 T-RPT Bitmap          Mode1 T-RPT Bitmap          Mode1 T-RPT Bitmap          SA_mode1_Tx_pool

SA_offset

SFN#0

Sidelink Control period

t

Scheduling Assignment PDU first transmission
&
retransmissions thereof

MAC PDU first transmission
&
retransmissions thereof

**Fig. 7**

Fig. 8

t

SC period

TB#1=100 bytes of LC#1 + 200 bytes of LC#2

TB#2=50 bytes of LC#2 + 80 bytes of LC#3

Tx Pool 1, Priorities: 1, 2

Tx Pool 2, Priorities: 4, 5

amount of data to transmit: LC#1+LC#2+LC#3 = 430 bytes

highest LC priority: 2

bytes

300
200
100

LC#1 Priority 2

LC#2 Priority 4

LC#3 Priority 5

selected sidelink destination

Fig. 9

```
                           ┌─────────────────┐
                           │    ProSe UE     │
                           └─────────────────┘
                                    │
                                    ▼
                    ┌───────────────────────────────┐
                    │    select sidelink destination │
                    └───────────────────────────────┘
                                    │
                                    ▼
                    ┌───────────────────────────────┐
                    │    select radio resource pool  │
                    └───────────────────────────────┘
                                    │
                                    ▼
```

determine sidelink data to transmit, among sidelink logical channels of selected sidelink destination and having the same priority as selected radio resource pool

determine transmission parameters, based on determined amount of data

transmit sidelink data based on transmission parameters

## Fig. 10

Fig. 11

```
                        ┌─────────────────────┐
                        │      ProSe UE       │
                        └─────────────────────┘
                                   │
                                   ▼
              ┌──────────────────────────────────────┐
              │       select sidelink destination     │
              └──────────────────────────────────────┘
                                   │
                                   ▼
  ┌────────────────────────────────────────────────────────────────────────┐
  │    select radio resource pool that has a priority which is the same or lower │
  │ than the lowest priority of the sidelink logical channels of selected sidelink destination │
  └────────────────────────────────────────────────────────────────────────┘
                                   │
                                   ▼
        ┌────────────────────────────────────────────────────────┐
        │           determine sidelink data to transmit,          │
        │ among sidelink logical channels of selected sidelink destination │
        └────────────────────────────────────────────────────────┘
                                   │
                                   ▼
   ┌──────────────────────────────────────────────────────────────────┐
   │ determine transmission parameters, based on determined amount of data │
   └──────────────────────────────────────────────────────────────────┘
                                   │
                                   ▼
     ┌────────────────────────────────────────────────────────────┐
     │  transmit sidelink data based on transmission parameters     │
     └────────────────────────────────────────────────────────────┘
```

Fig. 12

Fig. 13

**EP 3 206 452 B1**

**Patent documents cited in the description**

- US 20150305080 A1